(19) Europäisches Patentamt / European Patent Office / Office européen des brevets

(11) **EP 1 425 325 B1**

(12) # FASCICULE DE BREVET EUROPEEN


(45) Date de publication et mention de la délivrance du brevet:
**13.08.2014 Bulletin 2014/33**

(21) Numéro de dépôt: **02748940.0**

(22) Date de dépôt: **06.06.2002**

(51) Int Cl.:
***C08G 18/10** (2006.01)* ***C08G 18/28** (2006.01)*
***C08G 65/26** (2006.01)* ***C08G 65/333** (2006.01)*
***C09D 17/00** (2006.01)* ***C09D 7/00** (2006.01)*

(86) Numéro de dépôt international:
**PCT/FR2002/001939**

(87) Numéro de publication internationale:
**WO 2002/102868 (27.12.2002 Gazette 2002/52)**


(54) **EPAISSISSANTS NON IONIQUES POUR COMPOSITIONS PIGMENTAIRES, NOTAMMENT POUR PEINTURES,ET LEURS APPLICATIONS**

NICHT-IONISCHE VERDICKUNGSMITTEL FÜR PIGMENTZUSAMMENSETZUNGEN, INBESONDERE FÜR FARBEN , UND IHRE VERWENDUNGEN

NON-IONIC THICKENERS FOR PIGMENT COMPOSITIONS, IN PARTICULAR PAINTS AND APPLICATIONS THEREOF


(84) Etats contractants désignés:
**AT BE CH CY DE DK ES FI FR GB GR IE IT LI LU MC NL PT SE TR**

(30) Priorité: **19.06.2001 FR 0108062**

(43) Date de publication de la demande:
**09.06.2004 Bulletin 2004/24**



(73) Titulaire: **COATEX S.A.S.**
**69730 Genay (FR)**

(72) Inventeurs:
- **RUHLMANN, Denis**
**F-69730 Genay (FR)**
- **SUAU, Jean-Marc**
**F-69480 Lucenay (FR)**

(74) Mandataire: **Fiorucci, Hélène**
**COATEX SAS**
**35 Rue Ampère - ZI Lyon Nord**
**69730 GENAY (FR)**



(56) Documents cités:
**EP-A- 0 537 900** **DE-C- 4 101 239**
**US-A- 4 079 028** **US-A- 6 093 764**

- **DATABASE CAPLUS [en ligne] CHEMICAL ABSTRACTS SERVICE, COLUMBUS, OHIO, US; ABS NO. 1999-618898, HIRAI K. ET AL: "Emulsion pressure sensitive adhesive comp. etc" XP002192384 & JP 11 263961 A (SANYO CHEMICAL IND.) 20 septembre 1999 (1999-09-20)**
- **DATABASE CAPLUS [en ligne] CHEMICAL ABSTRACTS SERVICE, COLUMBUS, OHIO, US; Abs. no. 2001:793788, GOTA . ET AL: "Polyurethane-based thickener" XP002192385 & JP 2001 303461 A (ASAHI DENKA) 31 octobre 2001 (2001-10-31)**
- **PATENT ABSTRACTS OF JAPAN vol. 015, no. 216 (C-0837), 4 juin 1991 (1991-06-04) & JP 03 064309 A (TORAY IND INC), 19 mars 1991 (1991-03-19)**


EP 1 425 325 B1


Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Secteur technique de l'invention :

La présente invention concerne le secteur technique des compositions pigmentaires et notamment des compositions pigmentaires pour peintures et compositions analogues, et encore plus précisément les bases pigmentaires pour peinture destinées à la coloration.

Problème technique posé :

Dans le domaine de nombreuses compositions pigmentaires, mais tout spécialement dans celui des compositions pigmentaires et bases pour peinture, intervient le profil rhéologique de la composition ou de la base, la base étant la composition aqueuse chargée de couleur blanche, base de la composition pigmentaire colorée ou pigmentée.
Cette composition aqueuse chargée et/ou pigmentée de couleur blanche est formée d'une phase liquide qui peut être de l'eau ou un solvant organique miscible à l'eau ou encore un mélange des deux, d'un ou plusieurs polymères en suspension dans la phase liquide dénommés « liants », des charges et/ou pigments, d'au moins un agent dispersant des charges et/ou pigments qui peut être un polymère ou un copolymère hydrosoluble, des adjuvants aussi divers que des agents de coalescence, des biocides, des anti-mousses ou autres, et enfin d'au moins un agent épaississant qui est un polymère ou un copolymère naturel ou de synthèse.
Le profil rhéologique est bien connu par l'homme du métier, et est représenté par la courbe de la viscosité $\eta$ en fonction du gradient de vitesse D.
Sans dupliquer ce que connaît l'homme du métier, on indiquera rapidement que :

$$\eta\ (\text{Pa.s}) = \text{Contrainte (Pa)} \ / \ \text{Gradient D (s-1)}$$

La contrainte est une mesure de la pression appliquée à la composition ou à la base (sauf indication spécifique, on utilisera dans ce qui suit le vocable « composition » pour désigner toute composition, ou toute base pour peinture ou analogues, aqueuse chargée et/ou pigmentée telle que définie plus haut).
Dans le domaine des peintures, on doit obtenir simultanément (ce qui représente la difficulté majeure) :

- un bon comportement « dynamique » c'est-à-dire une viscosité faible à gradient élevé (ce qui représente en pratique l'exigence d'une faible viscosité à l'application de la peinture sur le support, l'application impliquant naturellement un fort cisaillement)
  et

- un bon comportement « statique », c'est-à-dire dans les conditions de stockage, ce qui revient en pratique à souhaiter une viscosité élevée (et d'autres propriétés souhaitées « en pot ») qui assure de bonnes conditions de stockage et de « vie en pot » à gradient faible ou moyen de vitesse.

Une qualité importante des compositions pigmentaires blanches se juge lorsque, précisément, on lui ajoute son composant pigmentaire coloré. En règle générale, on augmente l'intensité de la couleur de la composition lorsque l'on augmente la concentration en pigment(s).
Cependant, un problème important apparaît en présence d'un cisaillement, c'est-à-dire très précisément dans les conditions d'application d'une peinture sur son support, car il peut se produire une dissociation du ou des pigment(s) d'avec le reste de la composition. L'homme du métier nomme cette caractéristique « l'acceptance de couleur », que l'on appellera ici « compatibilité pigmentaire » de la composition concernée.
En pratique, si la composition finale de peinture (et/ou la base pour peinture dite « base blanche » car elle ne contient pas encore le ou les pigment(s) coloré(s)) présente une compatibilité pigmentaire insuffisante, l'application va provoquer une dissociation ou hétérogénéité de la composition, et donc des zones de densité de couleur différentes, par exemple des traînées moins denses en couleur, ce qui n'est évidemment pas le but recherché.
L'invention vise donc à proposer des bases blanches et/ou des compositions pigmentaires pour peinture (ensemble ci-dessous, y compris dans les revendications, comme déjà indiqué, « compositions ») présentant une très bonne compatibilité avec les colorants pigmentaires, aussi bien sur des peintures mates que sur des peintures satinées.
L'invention vise notamment à fournir des compositions qui assurent une excellente compatibilité pigmentaire et présentent une haute viscosité à bas et moyen gradient de cisaillement encore appelé gradient de vitesse, aussi bien sur des peintures mates que sur des peintures satinées, c'est-à-dire en particulier dans un domaine de gradient de

vitesse D comprise entre :

- 0 et 20 s-1 environ (« bas » gradient de vitesse)
  et
- 100 s-1 environ (gradient « moyen » de vitesse).

Les bases blanches contiennent, comme le sait l'homme du métier, des charges comme des carbonates, notamment de calcium, un oxyde de titane, du kaolin, et charges analogues bien connues, utilisables selon l'invention.

Les colorants pigmentaires sont également bien connus de l'homme du métier, et sont par exemple choisis parmi le noir de carbone, le bleu phtalocyanine, les oxydes de fer (qui donnent des tons jaunes, rouges, ...), et des sels de diazoïques.

Il est également connu d'effectuer un « test » ou essai simple et pratique, dénommé « essai de gommage au doigt », connu par l'homme du métier sous le vocable « rub out » qui sera utilisé ci-après. Cet essai reproduit correctement le cisaillement provoqué par une application au pinceau ou analogue.

L'essai consiste à appliquer une couche de peinture sur un support sans cisaillement, c'est-à-dire lentement et sans contrainte puis à appliquer un cisaillement par un mouvement rotatif d'un doigt appliqué sur ladite couche de peinture.

Si la composition présente une bonne ou très bonne compatibilité pigmentaire, l'intensité de couleur sur la zone frottée par le doigt va rester constante ou « homogène » par rapport à la zone non frottée ; dans le cas contraire, la zone frottée va présenter une hétérogénéité d'intensité de couleur par rapport à la zone non traitée. Cette hétérogénéité va s'exprimer par un écart colorimétrique mesuré à l'aide d'un spectro-colorimètre dénommé Spectro-pen™.

<u>Art antérieur :</u>

On connaît à ce jour des compositions efficaces à bas gradient de vitesse, mais dans la chimie des copolymères acryliques, dits épaississants ioniques, par opposition aux épaississants dits non ioniques.

Leur inconvénient majeur est que l'on doit effectuer la formulation à un pH supérieur à 7 car les épaississants acryliques doivent être neutralisés pour être efficaces.

Un autre inconvénient réside en ce que l'introduction desdits épaississants acryliques dans une peinture aqueuse diminue la tenue à l'eau desdites peintures.

Encore un autre inconvénient est le fait que ces produits présentent une faible propension à l'étalement, ce qui est évidemment un inconvénient sérieux dans le domaine des peintures et produits analogues.

Enfin, les produits de type polymères associatifs acryliques sont très sensibles aux sels. On connaît également des épaississants polyuréthannes permettant d'obtenir, dans une peinture aqueuse, des viscosités élevées sous haut gradient de vitesse mais qui ne sont pas capables de développer des viscosités Brookfield™ élevées.

Généralement ces produits sont fonctionnalisés avec des bouts de chaîne hydrocarbonés courts c'est-à-dire comportant moins de 14 atomes de carbone. Ces composés présentent l'avantage de conserver une certaine compatibilité pigmentaire mais ne permettent pas d'obtenir des viscosités Brookfield™ élevées sous bas gradient de cisaillement.

D'autre part, on connaît des polyuréthannes développant de fortes viscosités Brookfield™ sous bas gradient de cisaillement (Synthesis and Characterization of Model Associative Polymers, Richard D. Jenkins, David R. Bassett, Cesar A. Silebi et Mohamed S. El-Aasser, J. of Applied Polymer Science, vol.58, p 209-230 (1995) ; Polymeric Mat. Sci. and Engineering, vol.59, p 1033 (1988) ; Polymeric Mat. Sci. and Engineering, vol.61, p 533 (1989) ; Polymeric Paint Colour Journal, vol. 176, n° 4169, p 459 (June 1986)).

Il a maintenant été démontré que plus le nombre d'atomes de carbone présents dans les chaînes hydrocarbonés fonctionnalisant les chaînes polyuréthannes augmente, plus les viscosités Brookfield™ à bas gradient de cisaillement augmentent.

Ces dits polyuréthannes, procurant des viscosités Brookfield™ élevées à bas gradient de cisaillement, ont pour inconvénient majeur de diminuer dramatiquement la compatibilité pigmentaire dans les formulations aqueuses où ils sont introduits.

Comme il a été dit, l'invention vise notamment à fournir des compositions qui assurent une excellente compatibilité pigmentaire et présentent une haute viscosité à bas et moyen gradient de cisaillement, aussi bien sur des peintures mates que sur des peintures satinées, et ne présentent pas les inconvénients liés à l'utilisation des copolymères acryliques dits ioniques, à savoir l'obligation d'effectuer la formulation à un pH supérieur à 7, leur faible tenue à l'eau, ou leur faible propension à l'étalement, ou enfin leur très forte sensibilité aux sels.

L'invention vise donc à résoudre un problème particulièrement difficile et souvent rencontré par l'utilisateur.

Il existe donc un besoin important et reconnu pour des épaississants non ioniques qui permettraient de préparer des « compositions » (au sens général donné ci-dessus, et notamment des bases blanches, en particulier pour peinture)

présentant simultanément une viscosité Brookfield™ élevée sous bas gradient de cisaillement et une excellente compatibilité pigmentaire, aussi bien sur des peintures mates que sur des peintures satinées.

Il n'existe actuellement aucun produit réunissant ces deux qualités simultanément et ce aussi bien sur des peintures mates que sur des peintures satinées.

Comme on le verra ci-après, l'invention, non seulement apporte une solution à ce problème, mais propose en outre des épaississants qui sont de meilleurs épaississants que ceux de l'art antérieur.

L'invention concerne dans son principe général des molécules qui sont des épaississants présentant les propriétés ci-dessus, et qui sont du type polymère à chaîne d'oxyde d'alkylène, en particulier d'oxyde d'éthylène (OE) ou d'oxyde d'éthylène et d'oxyde de propylène (OP) caractérisées en ce qu'elles sont à base de motifs polyisocyanate et en particulier diisocyanate et comportent en bout de chaîne des groupements hydrocarbonés comportant eux-mêmes au moins trois cycles aromatiques substitués ou non.

On connaît déjà bien entendu des épaississants présentant des groupes hydrocarbonés en bout de chaîne, ces groupes présentant des longueurs de chaîne assez élevées et quelquefois des groupes aromatiques ou cycliques, mais l'invention a pu définir les critères de sélection ci-dessus.

Ces épaississants sont non ioniques.

Description détaillée de l'invention :

L'invention concerne en particulier des épaississants répondant à la formule (I) ci-dessous :

$$R\text{- }O\text{-}(OE)_x\text{-}(OP)_y(OE)_z\text{-}O\text{-}DI\text{-}(\text{-}PEG\text{-}DI\text{-})_n\text{-}O\text{-}(OE)_{x'}\text{ -}(OP)_y\text{' -}(OE)_{z'}\text{-}O\text{-}R'$$

dans laquelle :

DI est un groupe di-isocyanate tel que le toluène di-isocyanate, l'isophorone di-isocyanate ou l'hexaméthylène di-isocyanate,
PEG est un groupe polyéthylène glycol de poids moléculaire allant de 6 000 à 20 000, n est compris entre 1 et 40,
x, z, x', z'est compris entre 1 et 40,
y, y' est compris entre 0 et 40,
avec x + y + z + x' + y' + z' compris entre 2 et 80.

Selon un mode de réalisation préféré, le poids moléculaire du PEG est compris entre 6 000 et 15 000, de préférence voisin de 10 000.

Selon encore un mode de réalisation préféré, n est voisin de 1.

Selon encore un mode de réalisation préféré, x + y + z + x' + y' + z' est compris entre 2 et environ 50 avec y = y' = z = z' = 0.

Selon un mode de réalisation tout à fait préféré, x = x' = 1,3.

Selon un mode de réalisation tout à fait préféré, n = x = x' = 1 et y = y' = z = z' = 0.

R ou R' sont des groupes hydrocarbonés comportant au moins trois cycles aromatiques, substitués ou non, et sont différents ou identiques.

On notera que les polymères associatifs, connus de l'art antérieur, ne conviennent pas : par exemple, un produit fonctionnalisé avec un groupement ayant 8 atomes de carbone, qui est un pur associatif, donne certes une compatibilité pigmentaire convenable, mais il n'est pas un épaississant convenable, et de loin, à bas ou moyen gradient de cisaillement.

Par ailleurs, si l'on tente d'augmenter la longueur de chaîne au delà de 8 atomes de carbone, on augmente bien la viscosité à bas ou moyen gradient, ce qui était prévisible, mais on perd progressivement la compatibilité pigmentaire.

L'invention réalise donc une sélection bien définie aussi bien en terme de définition chimique que de propriétés surprenantes.

Selon un mode de réalisation préféré, le groupe R sera un groupe tristyrylphényle (TSP) de formule:

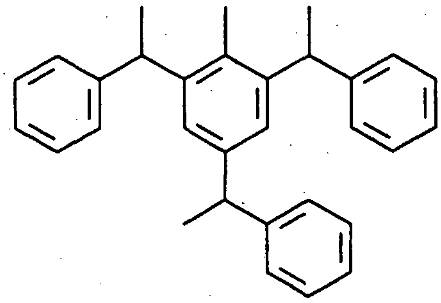

avec x + x' + y + y' + z + z' compris entre 2 et 80.

Selon un autre mode de réalisation préféré, le groupe R sera un groupe distyrylphényle (DSP) de formule :

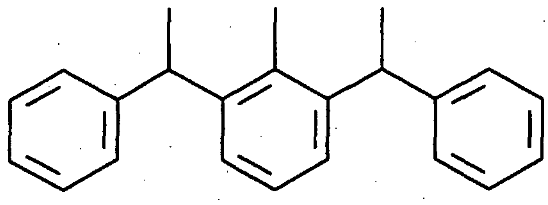

ou

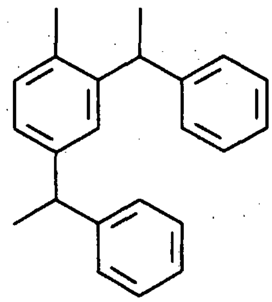

Selon encore un mode de réalisation de l'invention, le groupe R est substitué.

Les substituants du groupe R sont de préférence choisis parmi les groupes : phényles, benzyles ou des alkyles linéaires ou ramifiés comportant un nombre quelconque d'atomes de carbone.

Selon encore un mode de réalisation préféré, le ou lesdits substituants sont disposés sur les groupes aromatiques, eux-mêmes éventuellement substitués.

Selon un mode de réalisation tout à fait préféré, l'un des groupes phényles du groupe TSP est lui même substitué par au moins un groupe phényle.

Un cas intéressant selon l'invention est celui où l'un des groupes styryle du groupe TSP est lui même substitué par un groupe styryle, le groupe R étant alors un groupe tétrastyrylphényle.

On a déjà mentionné ci-dessus le cas où le TSP est substitué sur un phényle par un groupe cyclohexanyle.

L'invention concerne également l'utilisation du composé selon l'invention comme épaississant de compositions aqueuses, chargées et/ou pigmentées, blanches ou colorées.

L'invention concerne enfin les compositions aqueuses, chargées et/ou pigmentées, blanches ou colorées, contenant le composé épaississant selon l'invention.

Le composé épaississant selon l'invention est introduit dans lesdites compositions à raison de 0,1 % à 2,0 %, préférentiellement à raison de 0,2 % à 1,0 %, quantité exprimée en pour cent en poids sec par rapport à la masse totale de la composition.

Les compositions aqueuses, chargées et/ou pigmentées, blanches ou colorées, selon l'invention sont caractérisées en ce qu'elles contiennent le copolymère épaississant selon l'invention, de préférence à raison de 0,1 % à 2,0 %, et très préférentiellement à raison de 0,2 % à 1,0 %, quantité exprimée en pour cent en poids sec par rapport à la masse totale de la composition.

Dans le domaine des peintures, on utilise couramment les mesures de viscosité Brookfield™, bien connues de l'homme du métier.

Les mesures à « bas » gradient de cisaillement correspondent à des vitesses de l'appareil réglées à 10 et 100 tours/minute.

Ces diverses mesures de viscosité Brookfield™ sont effectuées après 24 heures de stockage au repos, 1 semaine de stockage au repos et 1 mois de stockage au repos.

On utilise également la mesure de la viscosité Stormer (exprimée en unités Krebs « KU »). Ces mesures sont également bien connues de l'homme du métier. Cette viscosité Stormer s'applique aux mesures à gradient « moyen » de cisaillement.

L'industrie est intéressée en premier lieu par une viscosité aussi élevée que possible à bas gradient de cisaillement (vie en pot), et faible à haut gradient (application). La mesure la plus importante sera donc la viscosité Brookfield™ à 10 tours/min.

Cependant, pour certaines peintures spéciales, il est intéressant d'avoir une viscosité Stormer aussi élevée que possible (donc à moyen gradient).

Les compositions aqueuses, chargées et/ou pigmentées, blanches ou colorées, selon l'invention sont caractérisées en ce qu'elles contiennent le copolymère épaississant selon l'invention, de préférence à raison de 0,1 % à 2,0 %, et très préférentiellement à raison de 0,2 % à 1,0 %, quantité exprimée en pour cent en poids sec par rapport à la masse totale de la composition, et en ce que la valeur de la somme des notations ($\Delta E_{mate} + \Delta E_{satinée} + \eta_{mate} + \eta_{satinée}$) est supérieure ou égale à 3 et très préférentiellement égale à 4, avec les notations suivantes, à savoir :

*pour les formulations mates, les valeurs :*

+ 1, si la viscosité Brookfield™ après 24 heures (notée $\eta_{mate}$) à 10 t/min. est supérieure ou égale à 3 000 mPa.s,
0, si la viscosité Brookfield™ après 24 heures (notée $\eta_{mate}$) à 10 t/min. est comprise entre 800 inclus et 3 000 mPa.s exclus,
- 1, si la viscosité Brookfield™ après 24 heures (notée $\eta_{mate}$) à 10 t/min. est inférieure à 800 mPa.s,
et
+ 1, si $\Delta E_{mate} < 1$
0, si $\Delta E_{mate}$ compris entre 1 et 2 inclus
- 1, si $\Delta E_{mate} > 2$

*pour les formulations satinées, les valeurs :*

+ 1, si la viscosité Brookfield™ après 24 heures (notée $\eta_{satinéee}$) à 10 t/min. est supérieure ou égale à 2 000 mPa.s,
0, si la viscosité Brookfield™ après 24 heures (notée $\eta_{satinéee}$) à 10 t/min. est comprise entre 800 inclus et 2 000 mPa.s exclus,
- 1, si la viscosité Brookfield™ après 24 heures (notée $\eta_{satinéee}$) à 10 t/min. est inférieure à 800 mPa.s,
et
+ 1, si $\Delta E_{satinée} < 1,5$
0, si $\Delta E_{satinée}$ compris entre 1,5 et 3 inclus
- 1, si $\Delta E_{satinée} > 3$

La détermination de la valeur du Delta E ($\Delta E$) de la formulation aqueuse colorée mate ou satinée est effectuée par ajout, à la base blanche, de 5 % en poids de pigment noir, c'est-à-dire de 10 g. de pigment noir (COLANYL™ Noir commercialisé par CLARIANT) dans 190 g. de peinture blanche.

Ce test de mesure de $\Delta E$ est celui déjà précité et dénommé « essai de gommage au doigt », connu par l'homme du métier sous le vocable « rub out ».

Ce test consiste à appliquer sans cisaillement, à l'aide d'un filmographe, 150 micromètres de la formulation de la peinture mate ou satinée colorée à tester sur une carte de contraste, c'est-à-dire lentement et sans contrainte et à attendre 45 secondes puis à appliquer un cisaillement par frottement, avec le doigt, du film encore visqueux de peinture, pendant trente secondes en un endroit quelconque.

Après séchage du film, la différence colorimétrique entre la zone cisaillée (zone frottée) et la zone non cisaillée (zone du film non frotté) déterminée au moyen du s spectro-colorimètre dénommé Spectro-pen, permet d'évaluer (valeur du $\Delta E$) si la composition de peinture testée présente ou non une bonne compatibilité pigmentaire.

L'invention sera mieux comprise à la lecture de la description qui va suivre, et des exemples non limitatifs ci-dessous.

<u>EXEMPLE 1 :</u>

Cet exemple a pour but de mettre en évidence les propriétés rhéologiques et de compatibilité pigmentaire

apportées par les agents épaississants selon l'invention pour des formulations pour peinture, mates, avec solvant et à dosage constant.

Ces formulations pour peintures comprennent les ingrédients et additifs listés dans la première partie des tableaux la, 1b et le constitutifs de la base blanche, et que l'homme du métier reconnaîtra.

Dans cette première partie des tableaux la, 1b et 1c :

- COATEX P 90 désigne un dispersant de type polyacrylate commercialisé par la société COATEX sous le nom de marque COATEX P 90.
- Byk 034™ désigne un agent anti-mousse commercialisé par la société BYK.
- Le monoéthylène glycol est un agent de coalescence.
- Le produit Mergal K6N™ désigne un agent biocide commercialisé par la société TROY.
- Le produit $TiO_2$ RL 68 est un oxyde de titane commercialisé par la société MILLENNIUM.
- Le produit Hydrocarb™ est une charge fine connue du type $CaCO_3$ naturel, commercialisée par le groupe OMYA.
- Le produit Durcal™ est une charge plus grossière, également connue, du type $CaCO_3$ naturel, commercialisée par le groupe OMYA.
- Le Rhodopas DS 910™ est un liant styrène-acrylique commercialisé par la société RHODIA.
- Le produit « White spirit » est une coupe pétrolière bien connue qui a une fonction de solvant.

Pour chaque essai, on a préparé la formulation de peinture mate précitée dans laquelle il est ajouté l'agent épaississant à tester.

Puis, pour chacun des essais, on procède aux mesures de viscosité Brookfield™ et Stormer de la formulation obtenue.

Ces mesures de viscosité Brookfield™ sont effectuées, à l'aide d'un viscosimètre Brookfield™ type RVT équipé du mobile approprié, sur chacun des échantillons représentatifs des différents essais après 24 heures de stockage à température ambiante (notée viscosité T = 24 h), après 1 semaine de stockage à température ambiante (notée viscosité T = 1 semaine), après 1 semaine de stockage dans une étuve à 50°C (notée viscosité T = 1 semaine 50°C), après 1 mois de stockage à température ambiante (notée viscosité T = 1 mois), après 1 mois de stockage dans une étuve à 50°C (notée viscosité T = 1 mois 50°C).

Les viscosités Stormer exprimées en Krebs Unit (KU) sont déterminées à l'aide d'un viscosimètre Stormer.

Dans la deuxième partie des tableaux la, 1b et 1c, intitulée compatibilité pigmentaire, figurent les résultats de L et de Delta E.

L déterminée par la mise en oeuvre du spectro-colorimètre Spectro-pen™, mesure la blancheur de la formulation appliquée sur la carte de contraste. Plus les valeurs se rapprochent de 100, moins la compatibilité est bonne.
Cette valeur ne figure qu'à titre illustratif.

<u>Essai n° 1 :</u>

Cet essai illustre l'art antérieur et met en oeuvre 0,57 % en poids sec, par rapport au poids total de la formulation, d'un polyuréthane bien connu et basé sur le produit de condensation d'un alcool comportant 16 atomes de carbone, de toluène diisocyanate et de polyéthylène glycol de poids moléculaire égal à 10 000.

<u>Essai n° 2 :</u>

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 1,

y = y' = z = z' = 0,
R = R' = TSP.

Essai n° 3 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 1,3 ;
y = y' = z = z' = 0,
R = R' = TSP.

Essai n° 4 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 5,
y = y, = z = z' = 0,
R=R'=TSP.

Essai n° 5 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 15,
y = y'= z = z' = 0,
R = R' = TSP.

Essai n° 6 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z' = 0,
R=R'=TSP.

Essai n° 7 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,

n = 1,
x = x' = 40,
y = y' = z = z' = 0,
R = R' = TSP.

Essai n° 8 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x=x'=15,
y = y' = z = z' = 0,
R = R' = DSP.

Essai n° 9 :

Cet essai illustre l'invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 7,
y = y' = z = z' = 0,
R = R' = DSP.

Essai n° 10 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 23,
y = y' = z = z' = 0,
R = R' = chaîne alkyle linéaire avec 12 atomes de carbone.

Essai n° 11 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z'= 0,
R = R' = chaîne alkyle linéaire constituée d'une coupe de 16 à 18 atomes de carbone.

Essai n° 12 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x=x'=20,
y = y' = z = z' = 0,
R = R' = chaîne alkyle linéaire avec 18 atomes de carbone.

Essai n° 13 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x=x'=25,
y = y' = z = z' = 0,
R = R' = chaîne alkyle linéaire avec 22 atomes de carbone.

Essai n° 14 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z' = 0,
R = R' = chaîne alkyle ramifiée avec 32 atomes de carbone.

Essai n° 15 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 30,
y = y' = z = z' = 0,
R = R' = groupe nonylphényle.

Essai n° 16 :

Cet essai illustre un domaine hors invention et met en oeuvre 0,57 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x=x'=20,
y = y' = z = z' = 0,
R = R' = groupe abiétate.

Essai n° 17 :

Cet essai illustre l'invention et met en oeuvre 0,57 % en poids sec, par rapport au poids total de la formulation,

d’un composé de formule (I) dans laquelle :

DI est l’isophorone di-isocyanate,
Le PEG est un polyéthylène glycol de poids moléculaire égal à 10 000,
n = 1,
x = z’ = 8,3,
x’ = z = 0,
y = y’ = 12,8,
R = R’ = TSP.

Essai n° 18 :

Cet essai illustre un domaine hors invention et met en oeuvre 0,57 % en poids sec, par rapport au poids total de la formulation, d’un composé de formule (I) dans laquelle:

DI est l’isophorone di-isocyanate,
Le PEG est un polyéthylène glycol de poids moléculaire égal à 10 000,
n = 1,
x = x’ = 6,4,
y = y’ = z = z’ = 0,
R = R’ = groupe béta-naphtyle.

Essai n° 19 :

Cet essai illustre l’invention et met en oeuvre 0,57 % en poids sec, par rapport au poids total de la formulation, d’un composé de formule (I) dans laquelle :

DI est l’isophorone di-isocyanate,
Le PEG est un polyéthylène glycol de poids moléculaire égal à 6 000,
n = 1,
x = x’ = 1,3,
y = y’ = z = z’ = 0,
R = R’ = TSP.

Essai n° 20 :

Cet essai illustre l’invention et met en oeuvre 0,57 % en poids sec, par rapport au poids total de la formulation, d’un composé de formule (I) dans laquelle :

DI est l’isophorone di-isocyanate,
Le PEG est un polyéthylène glycol de poids moléculaire égal à 8 000,
n = 1,
x = x’ = 1,3,
y = y’ = z = z’ = 0,
R = R’ = TSP.

Essai n° 21 :

Cet essai illustre l’invention et met en oeuvre 0,57 % en poids sec, par rapport au poids total de la formulation, d’un composé de formule (I) dans laquelle :

DI est l’isophorone di-isocyanate,
Le PEG est un polyéthylène glycol de poids moléculaire égal à 20 000,
n = 1,
x = x’ = 1,3 ,
y = y’ = z = z’ = 0,
R=R’=TSP

Essai n° 22 :

Cet essai illustre l'invention et met en oeuvre 0,57 % en poids sec, par rapport au poids total de la formulation, d'un composé de formule (I) dans laquelle :

DI est le toluène di-isocyanate,

Le PEG est un polyéthylène glycol de poids moléculaire égal à 10 000,
n = 1,
x = x' = 1,3 ,
y = y, = z = z' = 0,
R = R' = TSP.

Tous les résultats de viscosités Brookfield™ (à 10 et 100 trs/min.) et de viscosité Stormer, ainsi que les valeurs de L et de Delta E ($\Delta$E), pour des formulations de base pigmentées et relatifs aux essais précités sont rassemblés dans les tableaux la, 1b et 1c, suivants.

TABLEAU 1a

| | | Art antérieur | Invention | Invention | Intention | Invention | Invention | Invention | Invention | Invention |
|---|---|---|---|---|---|---|---|---|---|---|
| **ESSAI N°** | | **1** | **2** | **3** | **4** | **5** | **6** | **7** | **8** | **9** |
| Eau brute | | 276,9 | 272 | 272 | 272 | 272 | 272 | 272 | 272 | 272 |
| Coatex P90 (40 %) | | 3 | 3 | 3 | 3 | 3 | 3 | 3 | 3 | 3 |
| Ammoniaque (28 %) | | 2,3 | 2,3 | 2,3 | 2,3 | 2,3 | 2,3 | 2,3 | 2,3 | 2,3 |
| Byk 034 | | 1 | 1 | 1 | 1 | 1 | 1 | 1 | 1 | 1 |
| Monoéthylèneglycel | | 10,2 | 10,2 | 10,2 | 10,2 | 10,2 | 10,2 | 10,2 | 10,2 | 10,2 |
| Mergal K6N | | 2 | 2 | 2 | 2 | 2 | 2 | 2 | 2 | 2 |
| TiO2 RL 68 | | 40 | 40 | 40 | 40 | 40 | 40 | 40 | 40 | 40 |
| Hydrocarb | | 207 | 207 | 207 | 207 | 207 | 207 | 207 | 207 | 207 |
| Durcal 2 | | 316 | 316 | 316 | 316 | 316 | 316 | 316 | 316 | 316 |
| Rhodopas DS 910 | | 120 | 120 | 120 | 120 | 120 | 120 | 120 | 120 | 120 |
| White Spirit | | 10,2 | 10,2 | 10,2 | 10,2 | 10,2 | 10,2 | 10.2 | 10,2 | 10,2 |
| **Epaississants** | | C16<br>OE = 0 | TSP<br>OE1 | TSP<br>OE1.3 | TSP<br>OE5 | TSP<br>OE15 | TSP<br>OE25 | TSP<br>OE40 | DSP<br>OE15 | DSP<br>OE7 |
| Quantité (g) | | 11,4 | 16,3 | 16,3 | 16,3 | 16,3 | 16,3 | 16,3 | 16,3 | 16.3 |
| Total (g) | | 1000 | 1000 | 1000 | 1000 | 1000 | 1000 | 1000 | 1000 | 1000 |
| % épaississant sec/formulation totale | | 0,57 | 0,57 | 0,57 | 0,57 | 0,57 | 0,57 | 0,57 | 0,57 | 0,57 |
| nH | | 9,1 | 9,1 | 9,1 | 9,1 | 9,1 | 9,1 | 9,1 | 9,1 | 9,1 |
| Viscosité Brookfield | 10 t/mn | 12300 | 17300 | 31500 | 12500 | 3600 | 2400 | 1300 | 1100 | 4800 |
| (mPa.s) | 100 t/mn | 2800 | 5900 | 11400 | 5700 | 2700 | 1800 | 900 | 800 | 3500 |
| T = 24 h | Visco. Stormer (KU) | 107 | 122 | > 141 | 122 | 104 | 95 | 82 | 81 | 109 |
| Viscosité Brookfield | 10 t/mn | 12400 | 17800 | 30900 | 11000 | 3700 | 2700 | 1400 | 1000 | 5300 |
| (mPa.s) | 100 t/mn | 2800 | 5990 | 10100 | 5400 | 2600 | 1900 | 900 | 800 | 3600 |
| T = 1 sem. | Visco. Stormer (KU) | 104 | 124 | > 141 | 125 | 108 | 99 | 87 | 84 | 111 |
| Viscosité Brookfield | 10 t/mn | 12500 | 12400 | 27100 | 10900 | 3200 | 2100 | 1000 | 1100 | 5600 |
| (mPa.s) | 100 t/mn | 3400 | 5100 | 9000 | 5100 | 2500 | 1500 | 700 | 800 | 3700 |
| T = 1 sem. 50°C | Visco. Storner (KU) | 111 | 122 | > 141 | 124 | 106 | 97 | 84 | 87 | 118 |
| Viscosité Brookfield | 10 t/mn | 12600 | 18100 | 32100 | 12900 | 3900 | 2600 | 1300 | 1200 | 6100 |
| (mPa.s) | 100 t/mn | 2900 | 6000 | 12000 | 5600 | 2800 | 2000 | 1100 | 800 | 3700 |
| T = 1 mois | Visco. Stormer (KU) | 106 | 125 | > 141 | 126 | 107 | 101 | 89 | 83 | 116 |

(suite)

| | | Art antérieur | Invention | Invention | Intention | Invention | Invention | Invention | Invention | Invention |
|---|---|---|---|---|---|---|---|---|---|---|
| ESSAI N° | | 1 | 2 | 3 | 4 | 5 | 6 | 7 | 8 | 9 |
| Viscosité Brookfield | 10 t/mn | 13100 | 15600 | 33400 | 11600 | 3800 | 2900 | 1200 | 1400 | 6400 |
| (mPa.s) | 100 t/mn | 3600 | 6200 | 11200 | 5200 | 2700 | 2100 | 800 | 900 | 3900 |
| T = 1 mois 50°C | Visco. Stormer (KU) | 115 | 128 | > 141 | 127 | 110 | 103 | 88 | 91 | 121 |
| Compatibilité pigmentaire (addition de 5 % en poids de pate pigmentaire noire) | | | | | | | | | | |
| Delta E | | 8,2 | 0,6 | 0,5 | 0.6 | 0,4 | 0,5 | 0,7 | 0,9 | 0,6 |
| L | | 40,3 | 28.7 | 29,4 | 29.2 | 28.7 | 28,5 | 28,6 | 28,3 | 29,2 |

TABLEAU 1b

| | | Hors invention | Hors invention | Hors invention | Hors invention | Hors invention | Hors invention | Hors invention | Invention | Hors invention |
|---|---|---|---|---|---|---|---|---|---|---|
| **ESSAI N°** | | **10** | **11** | **12** | **13** | **14** | **15** | **16** | **17** | **18** |
| Eau brute | | 272 | 272 | 272 | 272 . | 272 | 272 | 272 | 272 | 272 |
| Coatex P90 (40 %) | | 3 | 3 | 3 | 3 | 3 | 3 | 3 | 3 | 3 |
| Ammoniaque (28 %) | | 2,3 | 2,3 | 2,3 | 2,3 | 2,3 | 2,3 | 2,3 | 2,3 | 2,3 |
| Byk 034 | | 1 | 1 | 1 | 1 | 1 | 1 | 1 | 1 | 1 |
| Monoéthylèneglycol | | 10,2 | 10,2 | 10,2 | 10,2 | 10,2 | 10,2 | 10,2 | 10,2 | 10,2 |
| Mergal K6N | | 2 | 2 | 2 | 2 | 2 | 2 | 2 | 2 | 2 |
| TiO2 RL 68 | | 40 | 40 | 40 | 40 | 40 | 40 | 40 | 40 | 40 |
| Hydrocarb | | 207 | 207 | 207 | 207 | 207 | 207 | 207 | 207 | 207 |
| Durcal 2 | | 316 | 316 | 316 | 316 | 316 | 316 | 316 | 316 | 316 |
| Rhodopas DS 910 | | 120 | 120 | 120 | 120 | 120 | 120 | 120 | 120 | 120 |
| White Spirit | | 10,2 | 10,2 | 10,2 | 10,2 | 10,2 | 10,2 | 10,2 | 10,2 | 10,2 |
| **Epaississants** | | C12 OE23 | C16C18 OE25 | C18 OE20 | C22 OE25 | C32 OE25 | NP30 | Abiétate | TSPOE8.3 OP 12.8 | Béta N. OE 6.4 |
| Quantité (g) | | 16,3 | 16,3 | 16,3 | 16,3 | 16,3 | 16,3 | 16,3 | 16,3 | 16,3 |
| Total (g) | | 1000 | 1000 | 1000 | 1000 | 1000 | 1000 | 1000 | 1000 | 1000 |
| % épaississant sec/formulation totale | | 0,57 | 0,57 | 0,57 | 0,57 | 0,57 | 0,57 | 0,57 | 0,57 | 0,57 |
| pH | | 9,1 | 9,1 | 9,1 | 9,1 | . 9,1 | 9,1 | 9,1 | 9,1 | 9,1 |
| Viscosité Brookfield | 10 t/mn | 1000 | 4100 | 29500 | 9700 | 400 | 600 | 400 | 1000 | 300 |
| (mPa.s) | 100 t/mn | 500 | 2800 | 11300 | 2400 | 200 | 400 | 300 | 700 | 200 |
| T = 24 h | Visco. Stormer (KU) | 73 | 102 | > 141 | 100 | 63 | 69 | 64 | 72 | 63 |
| Viscosité Brookfield | 10 t/mn | 1100 | 4600 | 30400 | 10100 | 400 | 700 | 500 | 1100 | 400 |
| (mPa.s) | 100 t/mn | 600 | 2900 | 11600 | 2600 | 200 | 400 | 400 | 700 | 300 |
| T= 1 sem. | Visco. Stormer (KU) | 77 | 106 | > 141 | 110 | 65 | 71 | 69 | 74 | 65 |

(suite)

| | | Hors invention | Hors invention | Hors invention | Hors invention | Hors invention | Hors invention | Hors invention | Invention | Hors invention |
|---|---|---|---|---|---|---|---|---|---|---|
| ESSAI N° | | 10 | 11 | 12 | 13 | 14 | 15 | 16 | 17 | 18 |
| Viscosité Brookfield | 10 t/mn | 1300 | 4900 | 35400 | 12600 | 400 | 800 | 500 | 1300 | 400 |
| (mPa.s) | 100 t/mn | 700 | 3200 | 13100 | 3100 | 300 | 400 | 300 | 800 | 200 |
| T = 1 sem. 50°C | Visco. Stormer (KU) | 81 | 110 | > 141 | 116 | 69 | 75 | 69 | 79 | 67 |
| Viscosité Brookfield | 10 t/mn | 1200 | 5800 | 31800 | 11000 | 500 | 900 | 400 | 1100 | 600 |
| (mPa.s) | 100 t/mn | 700 | 3300 | 12700 | 2800 | 200 | 500 | 300 | 900 | 400 |
| T = 1 mois | Visco. Stormer (KU) | 79 | 117 | > 141 | 115 | 68 | 75 | 66 | 73 | 67 |
| Viscosité Brookfield | 10 t/mn | 1600 | 5300 | 37800 | 13100 | 500 | 1000 | 500 | 1200 | 500 |
| (mPa.s) | 100 t/mn | 900 | 3400 | 14000 | 3300 | 400 | 600 | 300 | 900 | 300 |
| T = 1 mois 50°C | Visco. Stormer (KU) | 85 | 113 | > 141 | 121 | 71 | 77 | 68 | 81 | 69 |
| Compatibilité pigmentaire (addition de 5 % en poids de pate pigme entaire noire) | | | | | | | | | | |
| Delta E | | 1,2 | 1,5 | 1,1 | 2,4 | 2,1 | 0,7 | 0,5 | 0,8 | 0,6 |
| L | | 27,4 | 29.0 | 30,2 | 33,7 | 30,2 | 26,6 | 28,3 | 27,6 | 28,8 |

TABLEAU 1c

| | | Invention | Invention | Invention | Invention |
|---|---|---|---|---|---|
| ESSAI N° | | 19 | 20 | 21 | 22 |
| Eau brute | | 272 | 272 | 272 | 272 |
| Coatex P90 (40 %) | | 3 | 3 | 3 | 3 |
| Ammoniaque (28 %) | | 2,3 | 2,3 | 2,3 | 2,3 |
| Byk 034 | | 1 | 1 | 1 | 1 |
| Monoéthylèneglycol | | 10,2 | 10,2 | 10,2 | 10,2 |
| Mergal K6N | | 2 | 2 | 2 | 2 |
| TiO2 RL 68 | | 40 | 40 | 40 | 40 |
| Hydrocarb | | 207 | 207 | 207 | 207 |
| Durcal 2 | | 316 | 316 | 316 | 316 |
| Rhodopas DS 910 | | 120 | 120 | 120 | 120 |
| White Spirit | | 10,2 | 10,2 | 10,2 | 10,2 |
| **Epaississants** | | TSP OE1,3 | TSP OE1,3 | TSP OE1,3 | TSP OE1,3 |
| Quantité (g) | | 16,3 | 16,3 | 16,3 | 16,3 |
| Total (g) | | 1000 | 1000 | 1000 | 1000 |
| % épaississant sec/formulation totale | | 0,57 | 0,57 | 0,57 | 0,57 |
| | | 9,6 | 9,6 | 9,6 | 9,6 |
| Viscosité Brookfield | 10 t/mn | 11300 | 26100 | 3800 | 1400 |
| (mPa.s) | 100 t/mn | 3200 | 8700 | 2000 | 1100 |
| T = 24 h | Visco. Stormer (KU) | 113 | 141 | 92 | 81 |
| Viscosité Brookfield | 10 t/mn | 9000 | 22300 | 2300 | 1000 |
| (mPa.s) | 100 t/mn | 2700 | 7100 | 1600 | 700 |
| T = 1 sem. | Visco. Stormer (KU) | 101 | 133 | 89 | 78 |
| Viscosité Brookfield | 10 t/mn | 9700 | 18500 | 2100 | 500 |
| (mPa.s) | 100 t/mn | 2900 | 6300 | 1500 | 300 |
| T = 1 sem. 50°C | Visco. Stormer (KU) | 105 | 137 | 91 | 72 |
| Viscosité Brookfield | 10 t/mn | 9100 | 22100 | 2400 | 1000 |
| (mPa.s) | 100 t/mn | 2600 | 7200 | 1500 | 600 |
| T = 1 mois | Visco. Stormer (KU) | 100 | 131 | 88 | 76 |
| Viscosité Brookfield | 10 t/mn | 10500 | 19700 | 1900 | 300 |
| (mPa.s) | 100 t/mn | 3500 | 6300 | 1300 | 200 |
| T = 1 mois 50°C | Visco. Stormer (KU) | 107 | 138 | 92 | 70 |
| Compatibilité pigmentaire (addition de 5 % en poids de pate pigmentaire noire) | | | | | |
| Delta E | | 0,3 | 0,2 | 0,5 | 0,7 |
| L | | 29,3 | 29,0 | 28,0 | 28,2 |

La lecture des tableaux 1a, 1b et 1c permet d'attribuer les notations $\Delta E_{mate}$ et $\eta_{mate}$ aux différents essais.

Ainsi,

pour l'essai n° 1 : la notation $\eta_{mate}$ est égale à + 1 et la notation $\Delta E_{mate}$ est égale à-1 donnant un total ($\Delta E_{mate}$ + $\eta_{mate}$) égal à 0 ;

pour l'essai n° 2 : la notation $\eta_{mate}$ est égale à + 1 et la notation $\Delta E_{mate}$ est égale à + 1 donnant un total ($\Delta E_{mate}$ + $\eta_{mate}$) égal à 2 ;

(suite)

| | |
|---|---|
| pour l'essai n° 3 : | la notation $\eta_{mate}$ est égale à + 1 et la notation $\Delta E_{mate}$ est égale à + 1 donnant un total ($\Delta E_{mate}$ + $\eta_{mate}$) égal à 2 ; |
| pour l'essai n° 4 : | la notation $\eta_{mate}$ est égale à + 1 et la notation $\Delta E_{mate}$ est égale à + 1 donnant un total ($\Delta E_{mate}$ + $\eta_{mate}$) égal à 2 ; |
| pour l'essai n° 5 : | la notation $\eta_{mate}$ est égale à + 1 et la notation $\Delta E_{mate}$ est égale à + 1 donnant un total ($\Delta E_{mate}$ + $\eta_{mate}$) égal à 2 ; |
| pour l'essai n° 6 : | la notation $\eta_{mate}$ est égale à 0 et la notation $\Delta E_{mate}$ est égale à + 1 donnant un total ($\Delta E_{mate}$ + $\eta_{mate}$) égal à 1 ; |
| pour l'essai n° 7 : | la notation $\eta_{mate}$ est égale à 0 et la notation $\Delta E_{mate}$ est égale à + 1 donnant un total ($\Delta E_{mate}$ + $\eta_{mate}$) égal à 1 ; |
| pour l'essai n° 8 : | la notation $\eta_{mate}$ est égale à 0 et la notation $\Delta E_{mate}$ est égale à + 1 donnant un total ($\Delta E_{mate}$ + $\eta_{mate}$) égal à 1 ; |
| pour l'essai n° 9 : | la notation $\eta_{mate}$ est égale à + 1 et la notation $\Delta E_{mate}$ est égale à + 1 donnant un total ($\Delta E_{mate}$ + $\eta_{mate}$) égal à 2 ; |
| pour l'essai n° 10 : | la notation $\eta_{mate}$ est égale à 0 et la notation $\Delta E_{mate}$ est égale à 0 donnant un total ($\Delta E_{mate}$ + $\eta_{mate}$) égal à 0 ; |
| pour l'essai n° 11 : | la notation $\eta_{mate}$ est égale à + 1 et la notation $\Delta E_{mate}$ est égale à 0 donnant un total ($\Delta E_{mate}$ + $\eta_{mate}$) égal à 1 ; |
| pour l'essai n° 12 : | la notation $\eta_{mate}$ est égale à + 1 et la notation $\Delta E_{mate}$ est égale à 0 donnant un total ($\Delta E_{mate}$ + $\eta_{mate}$) égal à +1 ; |
| pour l'essai n° 13 : | la notation $\eta_{mate}$ est égale à + 1 et la notation $\Delta E_{mate}$ est égale à -1 1 donnant un total ($\Delta E_{mate}$ + $\eta_{mate}$) égal à 0 ; |
| pour l'essai n° 14 : | la notation $\eta_{mate}$ est égale à - 1 et la notation $\Delta E_{mate}$ est égale à - 1 donnant un total ($\Delta E_{mate}$ + $\eta_{mate}$) égal à -2 ; |
| pour l'essai n° 15 : | la notation $\eta_{mate}$ est égale à - 1 et la notation $\Delta E_{mate}$ est égale à + 1 donnant un total ($\Delta E_{mate}$ + $\eta_{mate}$) égal à 0. |
| pour l'essai n° 16 : | la notation $\eta_{mate}$ est égale à - 1 et la notation $\Delta E_{mate}$ est égale à + 1 donnant un total ($\Delta E_{mate}$ + $\eta_{mate}$) égal à 0. |
| pour l'essai n° 17 : | la notation $\eta_{mate}$ est égale à 0 et la notation $\Delta E_{mate}$ est égale à + 1 donnant un total ($\Delta E_{mate}$ + $\eta_{mate}$) égal à 1. |
| pour l'essai n° 18 : | la notation $\eta_{mate}$ est égale à - 1 et la notation $\Delta E_{mate}$ est égale à + 1 donnant un total ($\Delta E_{mate}$ + $\eta_{mate}$) égal à 0. |
| pour l'essai n° 19 : | la notation $\eta_{mate}$ est égale à + 1 et la notation $\Delta E_{mate}$ est égale à + 1 donnant un total ($\Delta E_{mate}$ + $\eta_{mate}$) égal à + 2. |
| pour l'essai n° 20 : | la notation $\eta_{mate}$ est égale à + 1 et la notation $\Delta E_{mate}$ est égale à + 1 donnant un total ($\Delta E_{mate}$ + $\eta_{mate}$) égal à + 2. |
| pour l'essai n° 21 : | la notation $\eta_{mate}$ est égale à + 1 et la notation $\Delta E_{mate}$ est égale à + 1 donnant un total ($\Delta E_{mate}$ + $\eta_{mate}$) égal à + 2. |
| pour l'essai n° 22 : | la notation $\eta_{mate}$ est égale à 0 et la notation $\Delta E_{mate}$ est égale à + 1 donnant un total ($\Delta E_{mate}$ + $\eta_{mate}$) égal à + 1. |

EXEMPLE 2 :

Cet exemple a pour but de mettre en évidence les propriétés rhéologiques et de compatibilité pigmentaire apportées par les agents épaississants selon l'invention pour des formulations pour peinture, satinées, avec solvant et à dosage constant.

Ces formulations pour peintures comprennent les ingrédients et additifs listés dans la première partie des tableaux 2a, 2b et 2c, constitutifs de la base blanche, et que l'homme du métier reconnaîtra.

Dans cette première partie des tableaux 2a, 2b et 2c, :

- COATEX BR3 désigne un dispersant de type polyacrylate commercialisé par la société COATEX sous le nom de marque COATEX BR3.

- Tego 1488 désigne un agent anti-mousse commercialisé par la société TEGO.

- BDG désigne le butyldiglycol qui est un agent de coalescence.
- MPG désigne le monopropylène glycol qui est un agent de coalescence.
- Le produit Mergal K6N™ désigne un agent biocide commercialisé par la société TROY.
- Le produit Hydrocarb™ est une charge fine connue du type $CaCO_3$ naturel, commercialisée par le groupe OMYA.
- Le produit $TiO_2$ RHD2 est un oxyde de titane commercialisé par la société ELEMENTIS.
- L'Acronal 290D™ est un liant styrène-acrylique commercialisé par la société BASF.
- Le Texanol commercialisé par la société EASTMAN CHEMICAL est une coupe pétrolière bien connue qui a une fonction de solvant.

Pour chaque essai, on a préparé la formulation de peinture satinée précitée dans laquelle il est ajouté l'agent épaississant à tester.

Puis pour chacun des essais, on procède aux mesures de viscosité Brookfield™ et Stormer de la formulation obtenue selon les mêmes conditions et le même matériel mis en oeuvre dans l'exemple 1.

Il en est de même pour la détermination de la valeur du $\Delta E$ sur la pâte pigmentaire noire obtenue par ajout de 5 % en poids de la même pâte pigmentaire noire que dans l'exemple précédent, sur les bases blanches à tester.

<u>Essai n° 23</u> :

Cet essai illustre l'art antérieur et met en oeuvre 0,22 % en poids sec, par rapport au poids total de la formulation, d'un polyuréthane bien connu et basé sur le produit de condensation d'un alcool comportant 16 atomes de carbone, de toluène di-isocyanate et de polyéthylène glycol de poids moléculaire égal à 10 000.

<u>Essai n° 24</u> :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n=1,
x = x' = 1,
y = y ' = z = z' = 0,
R = R' = TSP.

<u>Essai n° 25</u> :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n=1,
x=x'=1,3;
y = y' = z = z' = 0,
R = R' = TSP.

<u>Essai n° 26</u> :

Cet essai illustre l'invention et met en oeuvre 0,22 % en poids sec, par rapport au poids total de la formulation, d'un composé de formule (I) dans laquelle :

DI est l'isophorone di-isocyanate,

Le PEG est un polyéthylène glycol de poids moléculaire égal à 10 000,
n = 1,
x = x' = 5,
y = y' = z = z' = 0,
R = R' = TSP.

Essai n° 27 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 15,
y = y' = z = z' = 0,
R = R' = TSP.

Essai n° 28 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z' = 0,
R = R' = TSP.

Essai n° 29:

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 40,
y = y' = z = z' = 0,
R = R' = TSP.

Essai n° 30 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 15,
y = y' = z = z' = 0,
R=R'=DSP.

Essai n° 31 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 7,
y = y' = z = z' = 0,
R = R' = DSP.

Essai n° 32 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 23,
y = y' = z = z' = 0,
R = R' = chaîne alkyle linéaire avec 12 atomes de carbone.

Essai n° 33 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z' = 0,
R = R' = chaîne alkyle linéaire constituée d'une coupe de 16 à 18 atomes de carbone.

Essai n° 34 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 20,
y = y' = z = z' = 0,
R = R' = chaîne alkyle linéaire avec 18 atomes de carbone.

Essai n° 35 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z' = 0,
R = R' = chaîne alkyle linéaire avec 22 atomes de carbone.

Essai n° 36 :

Cet essai illustre un domaine hors invention et met en oeuvre 0,22 % en poids sec, par rapport au poids total

de la formulation, d'un composé de formule (I) dans laquelle :

DI est l'isophorone di-isocyanate,
Le PEG est un polyéthylène glycol de poids moléculaire égal à 10 000,
n = 1,
x = x' = 25,
y = y' = z = z' = 0,
R = R' = chaîne alkyle ramifiée avec 32 atomes de carbone.

Essai n° 37 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 30,
y = y' = z = z' = 0,
R = R' = groupe nonylphényle.

Essai n° 38 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 20,
y = y' = z = z' = 0,
R = R' = groupe abiétate.

Essai n° 39 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = z' = 8,3,
x' = z = 0,
y = y' = 12,8,
R = R' = TSP.

Essai n° 40 :

Cet essai illustre un domaine hors invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 10 000,
n = 1,
x = x' = 6,4,
y = y' = z = z' = 0,
R = R' = groupe béta-naphtyle.

Essai n° 41 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 6 000,
n = 1,
x = x' = 1,3;
y = y' = z = z' = 0,
R=R'=TSP.

Essai n° 42 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 8 000,
n = 1,
x = x' = 1,3,
y = y' = z = z' = 0,
R=R'=TSP.

Essai n° 43 :

Cet essai illustre l'invention et met en oeuvre 0,22 % en poids sec, par rapport au poids total de la formulation, d'un composé de formule (I) dans laquelle :

DI est l'isophorone di-isocyanate,
Le PEG est un polyéthylène glycol de poids moléculaire égal à 20 000,
n=1,
x=x'=1,3,
y=y'=z=z'=0,
R = R' = TSP.

Essai n° 44 :

Cet essai illustre l'invention et met en oeuvre 0,22 % en poids sec, par rapport au poids total de la formulation, d'un composé de formule (I) dans laquelle :

DI est le toluène di-isocyanate,
Le PEG est un polyéthylène glycol de poids moléculaire égal à 10 000,
n = 1,
x = x' = 1,3,
y = y' = z = z' = 0,
R=R'=TSP.

Tous les résultats de viscosités Brookfield™ (à 10 et 100 trs/min.) et de viscosité Stormer, ainsi que les valeurs de L et de Delta E, pour des formulations de base pigmentées et relatifs aux essais précités sont rassemblés dans les tableaux 2a, 2b et 2c suivants.

TABLEAU 2a

| | Art antérieur | Invention | Invention | Invention | Invention | Invention | Invention | Invention | Invention |
|---|---|---|---|---|---|---|---|---|---|
| **ESSAI N°** | 23 | 24 | 25 | 26 | 27 | 28 | 29 | 30 | 31 |
| Eau brute | 135,5 | 133,6 | 133,6 | 133,6 | 133,6 | 133,6 | 133,6 | 133,6 | 133,6 |
| Coatex BR3 (40%) | 5 | 5 | 5 | 5 | 5 | 5 | 5 | 5 | 5 |
| Tego 1488 | 2 | 2 | 2 | 2 | 2 | 2 | 2 | 2 | 2 |
| B.D.G | 25 | 25 | 25 | 25 | 25 | 25 | 25 | 25 | 25 |
| M.P.G | 15 | 15 | 15 | 15 | 15 | 15 | 15 | 15 | 15 |
| Mergal K6N | 3 | 3 | 3 | 3 | 3 | 3 | 3 | 3 | 3 |
| TiO2 RHD2 | 200 | 200 | 200 | 200 | 200 | 200 | 200 | 200 | 200 |
| Hydrocarb | 150 | 150 | 150 | 150 | 150 | 150 | 150 | 150 | 150 |
| Acronal 290D | 450 | 450 | 450 | 450 | 450 | 450 | 450 | 450 | 450 |
| Texanol | 10 | 10 | 10 | 10 | 10 | 10 | 10 | 10 | 10 |
| **Epaississants** | C16<br>OE=0 | TSP<br>OE1 | TSP<br>OE1.3 | TSP<br>OE5 | TSP<br>OE15 | TSP<br>OE25 | TSP<br>OE40 | DSP<br>OE15 | DSP<br>OE7 |
| Quantité (g) | 4,5 | 6,4 | 6,4 | 6,4 | 6,4 | 6,4 | 6,4 | 6,4 | 6,4 |
| Total (g) | 1000 | 1000 | 1000 | 1000 | 1000 | 1000 | 1000 | 1000 | 1000 |
| % épaississant sec/formulation totale | 0,22 | 0,22 | 0,22 | 0,22 | 0,22 | 0,22 | 0,22 | 0,22 | 0,22 |
| pH | 8,5 | 8,5 | 8,5 | 8,5 | 8,5 | 8,5 | 8,5 | 8,5 | 8,5 |
| Viscosité Brookfield 10 t/mn | 7700 | 14800 | 21600 | 10000 | 4100 | 3300 | 2400 | 2400 | 5300 |
| (mPa.s) 100 t/mn | 3500 | 6000 | 8700 | 4900 | 2000 | 1600 | 1100 | 1000 | 2600 |
| T = 24 h Visco. Stormer (KU) | 106 | 125 | 140 | 121 | 97 | 92 | 82 | 80 | 101 |
| Viscosité Brookfield 10 t/mn | 7400 | 15200 | 22100 | 9800 | 4500 | 3600 | 2600 | 2900 | 5900 |
| (mPa.s) 100 t/mn | 3500 | 6000 | 8800 | 4900 | 2200 | 1700 | 1000 | 1100 | 2800 |
| T=1 sem. Visco. Stormer (KU) | 106 | 124 | 139 | 120 | 101 | 95 | 82 | 80 | 103 |
| Viscosité Brookfield 10 t/mn | 8600 | 16700 | 23500 | 12100 | 5200 | 4100 | 3300 | 3600 | 6400 |
| (mPa.s) 100 t/mn | 3800 | 6700 | 9200 | 5500 | 2500 | 1800 | 1200 | 1300 | 3300 |
| T=1 sem. 50°C Visco. Stormer (KU) | 113 | 135 | > 141 | 130 | 106 | 100 | 86 | 83 | 107 |
| Viscosité Brookfield 10 t/mn | 7600 | 15400 | 22800 | 10200 | 4700 | 4000 | 3000 | 3100 | 6600 |
| (mPa.s) 100 t/mn | 3500 | 6100 | 8900 | 5000 | 2200 | 1900 | 1200 | 1200 | 3200 |
| T = 1 mois Visco. Stormer (KU) | 106 | 125 | 140 | 122 | 104 | 98 | 86 | 81 | 105 |
| Viscosité Brookfield 10 t/mn | 8900 | 17400 | 25000 | 12800 | 5500 | 4700 | 3900 | 4400 | 7100 |

(suite)

| | Art antérieur | Invention | Invention | Invention | Invention | Invention | Invention | Invention | Invention |
|---|---|---|---|---|---|---|---|---|---|
| ESSAI N° | 23 | 24 | 25 | 26 | 27 | 28 | 29 | 30 | 31 |
| (mPa.s) 100 t/mn | 4100 | 6900 | 9600 | 5500 | 2600 | 2000 | 1500 | 1400 | 3500 |
| T=1 mois 50°C Visco. Stormer (KU) | 115 | 140 | > 141 | 131 | 110 | 105 | 91 | 89 | 111 |
| Compatibilité pigmentaire (addition de 5 % en poids de pate pigmentaire noire) | | | | | | | | | |
| Delta E | 16,2 | 0,4 | 0,4 | 0,5 | 0,4 | 1,1 | 1,3 | 1,3 | 0,7 |
| L | 58,1 | 39,9 | 39,5 | 39,6 | 38,6 | 38,8 | 38,7 | 38,8 | 39,2 |

TABLEAU 2b

| | Hors invention | Hors invention | Hors invention | Hors invention | Hors invention | Hors invention | Hors invention | Invention | Hors invention |
|---|---|---|---|---|---|---|---|---|---|
| **ESSAI N°** | 32 | 33 | 34 | 35 | 36 | 37 | 38 | 39 | 40 |
| Eau brute | 133,6 | 133,6 | 133,6 | 133,6 | 133,6 | 133,6 | 133,6 | 133,6 | 133,6 |
| Coatex BR3 (40 %) | 5 | 5 | 5 | 5 | 5 | 5 | 5 | 5 | 5 |
| Tego 1488 | 2 | 2 | 2 | 2 | 2 | 2 | 2 | 2 | 2 |
| B.D.G | 25 | 25 | 25 | 25 | 25 | 25 | 25 | 25 | 25 |
| M.P.G | 15 | 15 | 15 | 15 | 15 | 15 | 15 | 15 | 15 |
| Mergal K6N | 3 | 3 | 3 | 3 | 3 | | 3 | 3 | 3 |
| TiO2 RHD2 | 200 | 200 | 200 | 200 | 200 | 200 | 200 | 200 | 200 |
| Hydrocarb | 150 | 150 | 150 | 150 | 150 | 150 | 150 | 150 | 150 |
| Acronal 290D | 450 | 450 | 450 | 450 | 450 | 450 | 450 | 450 | 450 |
| Texanol | 10 | 10 | 10 | 10 | 10 | 10 | 10 | 10 | 10 |
| Epaississants | C12 OE23 | C16C18 OE25 | C18 OE20 | C22 OE25 | C32 OE25 | NP30 | Abiétate | TSPOE8.3 OP 12.8 | Béta N. OE 6.4 |
| Quantité (g) | 6,4 | 6,4 | 6,4 | 6,4 | 6,4 | 6,4 | 6,4 | 6,4 | 6,4 |
| Total (g) | 1000 | 1000 | 1000 | 1000 | 1000 | 1000 | 1000 | 1000 | 1000 |
| % épaississant sec/formulation totale | 0,22 | 0,22 | 0,22 | 0,22 | 0,22 | 0,22 | 0,22 | 0,22 | 0,22 |
| pH | 8,5 | 8,5 | 8,5 | 8,5 | 8,5 | 8,5 | 8,5 | 8,5 | 8,5 |
| Viscosité Brookfield (mPa.s) T = 24 h — 10 t/mn | 1600 | 2400 | 6300 | 6600 | 3300 | 1300 | 1100 | 2700 | 1200 |
| 100 t/mn | 600 | 1300 | 3200 | 2100 | 800 | 500 | 400 | 1400 | 400 |
| Visco. Stormer (KU) | 70 | 83 | 106 | 91 | 70 | 65 | 63 | 84 | 68 |
| Viscosité Brookfield (mPa.s) T = 1 sem. — 10 t/mn | 1700 | 2800 | 7100 | 7300 | 3400 | 1700 | 1300 | 2700 | 1400 |
| 100 t/mn | 650 | 1300 | 3400 | 2200 | 1000 | 800 | 500 | 1500 | 500 |
| Visco. Stormer (KU) | 72 | 84 | 106 | 92 | 74 | 71 | 66 | 84 | 71 |

(suite)

| | | Hors invention | Hors invention | Hors invention | Hors invention | Hors invention | Hors invention | Hors invention | Invention | Hors invention |
|---|---|---|---|---|---|---|---|---|---|---|
| ESSAI N° | | 32 | 33 | 34 | 35 | 36 | 37 | 38 | 39 | 40 |
| Viscosité Brookfield | 10 t/mn | 2200 | 3500 | 7900 | 10200 | 5000 | 1700 | 1500 | 3600 | 2100 |
| (mPa.s) | 100 t/mn | 800 | 1600 | 3600 | 2600 | 1100 | 600 | 500 | 1700 | 700 |
| T = 1 sem. 50°C | Visco. Stormer (KU) | 77 | 90 | 114 | 99 | 76 | 68 | 66 | 92 | 75 |
| Viscosité Brookfield | 10 t/mn | 2100 | 3400 | 8000 | 8100 | 3700 | 1900 | 1400 | 3100 | 1500 |
| (mPa.s) | 100 t/mn | 800 | 1700 | 3600 | 2400 | 1100 | 800 | 500 | 1500 | 500 |
| T= 1 mois | Visco. Stormer (KU) | 74 | 89 | 110 | 98 | 76 | 73 | 67 | 85 | 74 |
| Viscosité Brookfield | 10 t/mn | 2600 | 4200 | 8300 | 12600 | 5800 | 2200 | 1700 | 4400 | 2700 |
| (mPa.s) | 100 t/mn | 900 | 1900 | 3700 | 2900 | 1400 | 800 | 600 | 1900 | 800 |
| T = 1 mois 50°C | Visco. Stormer (KU) | 81 | 96 | 119 | 110 | 83 | 70 | 69 | 101 | 81 |
| Compatibilité pigmentaire (addition de 5 % en poids de pate pigmentaire noire) | | | | | | | | | | |
| Delta E | | 1 | 1,7 | 13,4 | 23,2 | 13 | 1,4 | 1,8 | 1,2 | 1,3 |
| L | | 38,5 | 40,5 | 52,9 | 62,4 | 53,4 | 38,3 | 37,8 | 38,9 | 38,6 |

TABLEAU 2c

| | | Invention | Invention | Invention | Invention |
|---|---|---|---|---|---|
| **ESSAI N°** | | **41** | **42** | **43** | **44** |
| Eau brute | | 133,6 | 133,6 | 133,6 | 133,6 |
| Coatex BR3 (40 %) | | 5 | 5 | 5 | 5 |
| Tego 1488 | | 2 | 2 | 2 | 2 |
| B.D.G | | 25 | 25 | 25 | 25 |
| M.P.G | | 15 | 15 | 15 | 15 |
| Mergal K6N | | 3 | 3 | 3 | 3 |
| TiO2 RHD2 | | 200 | 200 | 200 | 200 |
| Hydrocarb | | 150 | 150 | 150 | 150 |
| Acronal 290D | | 450 | 450 | 450 | 450 |
| Texanol | | 10 | 10 | 10 | 10 |
| **Epaississants** | | TSP OE1,3 | TSP OE1,3 | TSP OE1,3 | TSP OE1,3 |
| Quantité (g) | | 6,4 | 6,4 | 6,4 | 6,4 |
| Total (g) | | 1000 | 1000 | 1000 | 1000 |
| % épaississant sec/formulation totale | | 0,22 | 0,22 | 0,22 | 0,22 |
| pH | | 8,4 | 8,4 | 8,4 | 8,4 |
| Viscosité Brookfield | 10 t/mn | 20700 | 24800 | 6800 | 5300 |
| (mPa.s) | 100 t/mn | 7600 | 9300 | 2800 | 2300 |
| T = 24 h | Visco. Stormer (KU) | 137 | >141 | 101 | 98 |
| Viscosité Brookfield | 10 t/mn | 20200 | 26300 | 7400 | 5900 |
| (mPa.s) | 100 t/mn | 7400 | 9200 | 2900 | 2600 |
| T = 1 sem. | Visco. Stormer (KU) | 139 | > 141 | 102 | 100 |
| Viscosité Brookfield | 10 t/mn | 21500 | 24700 | 8100 | 5800 |
| (mPa.s) | 100 t/mn | 7400 | 9100 | 3100 | 2300 |
| T = 1 sem. 50°C | Visco. Stormer (KU) | > 141 | > 141 | 108 | 102 |
| Viscosité Brookfield | 10 t/mn | 20500 | 27200 | 7700 | 5800 |
| (mPa.s) | 100 t/mn | 7400 | 9300 | 3100 | 2700 |
| T = 1 mois | Visco. Stormer (KU) | 138 | > 141 | 103 | 101 |
| Viscosité Brookfield | 10 t/mn | 22400 | 25100 | 8500 | 5800 |
| (mPa.s) | 100 t/mn | 7600 | 9200 | 3200 | 2400 |
| T = 1 mois 50°C | Visco. Stormer (KU) | > 141 | > 141 | 108 | 102 |
| Compatibilité pigmentaire (addition de 5 % en poids de pate pigmentaire noire) | | | | | |
| Delta E | | 0,6 | 0,4 | 0,3 | 0,1 |
| L | | 37,5 | 36,6 | 35,4 | 36,0 |

La lecture des tableaux 2a, 2b et 2c permet d'attribuer les notations $\Delta E_{satinée}$ et $\eta_{satinée}$ aux différents essais.

Ainsi,

pour l'essai n° 23 : la notation $\eta_{satinée}$ est égale à + 1 et la notation $\Delta E_{satinée}$ est égale à - 1 donnant un total ($\Delta E_{satinée}$ + $\eta_{satinée}$) égal à 0 ;

pour l'essai n° 24 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;

pour l'essai n° 25 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;

(suite)

pour l'essai n° 26 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2;

pour l'essai n° 27 : la notation $\eta_{mate}$ est égale à +1 et la notation $\Delta E_{mate}$ est égale à + 1 donnant un total ($\Delta E_{mate}$ + $\eta_{mate}$) égal à + 2 ;

pour l'essai n° 28 : la notation $\eta_{satinée}$ est égale à + 1 et la notation $\Delta E_{satinée}$ est égale à + 1 donnant un total ($\Delta E_{satinée}$ + $\eta_{satinée}$) égal à 2 ;

pour l'essai n° 29 : la notation $\eta_{satinée}$ est égale à + 1 et la notation $\Delta E_{satinée}$ est égale à + 1 donnant un total ($\Delta E_{satinée}$ + $\eta_{satinée}$) égal à 2 ;

pour l'essai n° 30 : la notation $\eta_{satinée}$ est égale à + 1 et la notation $\Delta E_{satinée}$ est égale à + 1 donnant un total ($\Delta E_{satinée}$ + $\eta_{satinée}$) égal à 2 ;

pour l'essai n° 31 : la notation $\eta_{satinée}$ est égale à + 1 et la notation $\Delta E_{satinée}$ est égale à + 1 donnant un total ($\Delta E_{satinée}$ + $\eta_{satinée}$) égal à 2 ;

pour l'essai n° 32 : la notation $\eta_{satinée}$ est égale à 0 et la notation $\Delta E_{satinée}$ est égale à + 1 donnant un total ($\Delta E_{satinée}$ + $\eta_{satinée}$) égal à 1 ;

pour l'essai n° 33 : la notation $\eta_{satinée}$ est égale à + 1 et la notation $\Delta E_{satinée}$ est égale à 0 donnant un total ($\Delta E_{satinée}$ + $\eta_{satinée}$) égal à 1 ;

pour l'essai n° 34 : la notation $\eta_{satinée}$ est égale à + 1 et la notation $\Delta E_{satinée}$ est égale à - 1 donnant un total ($\Delta E_{satinée}$ + $\eta_{satinée}$) égal à 0 ;

pour l'essai n° 35 : la notation $\eta_{satinée}$ est égale à + 1 et la notation $\Delta E_{satinée}$ est égale à - 1 donnant un total ($\Delta E_{satinée}$ + $\eta_{satinée}$) égal à 0 ;

pour l'essai n° 36 : la notation $\eta_{satinée}$ est égale à + 1 et la notation $\Delta E_{satinée}$ est égale à - 1 donnant un total ($\Delta E_{satinée}$ + $\eta_{satinée}$) égal à 0 ;

pour l'essai n° 37 : la notation $\eta_{satinée}$ est égale à 0 et la notation $\Delta E_{satinée}$ est égale à + 1 donnant un total ($\Delta E_{satinée}$ + $\eta_{satinée}$) égal à 1 ;

pour l'essai n° 38 : la notation $\eta_{satinée}$ est égale à 0 et la notation $\Delta E_{satinée}$ est égale à 0 donnant un total ($\Delta E_{satinée}$ + $\eta_{satinée}$) égal à 0 ;

pour l'essai n° 39 : la notation $\eta_{satinée}$ est égale à + 1 et la notation $\Delta E_{satinée}$ est égale à + 1 donnant un total ($\Delta E_{satinée}$ + $\eta_{satinée}$) égal à 2 ;

pour l'essai n° 40 : la notation $\eta_{satinée}$ est égale à 0 et la notation $\Delta E_{satinée}$ est égale à + 1 donnant un total ($\Delta E_{satinée}$ + $\eta_{satinée}$) égal à 1.

pour l'essai n° 41 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;

pour l'essai n° 42 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;

pour l'essai n° 43 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;

pour l'essai n° 44 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2.

La somme des totaux des notations de l'exemple 1 relatif aux peintures mates et de l'exemple 2 relatif aux peintures satinées est rassemblée dans le tableau 3 suivant.

TABLEAU 3

| | | | PEINTURE MATE | | | PEINTURE SATINEE | | | TOTAL |
|---|---|---|---|---|---|---|---|---|---|
| | GROUPE R | x + y + z = x' + y' + z' | Essai n° | Notation η mate | Notation ΔE mate | Essai n° | Notation η satinée | Notation ΔE satinée | η mate + ΔE mate) + (η satinée + ΔE satinée) |
| Art antérieur | $C_16$ | 0 | 1 | + 1 | -1 | 23 | +1 | -1 | 0 |
| Invention | TSP | 1 | 2 | +1 | +1 | 24 | +1 | +1 | +4 |
| Invention | TSP | 1,3 | 3 | +1 | +1 | 25 | +1 | +1 | +4 |

(suite)

| | GROUPE R | x + y + z = x'+y' + z' | PEINTURE MATE | | | PEINTURE SATINEE | | | TOTAL |
|---|---|---|---|---|---|---|---|---|---|
| | | | Essai n° | Notation η mate | Notation ΔE mate | Essai n° | Notation η satinée | Notation ΔE satinée | η mate + ΔE mate) + (η satinée + ΔE satinée) |
| Invention | TSP | 5 | 4 | +1 | +1 | 26 | +1 | +1 | +4 |
| Invention | TSP | 15 | 5 | +1 | +1 | 27 | +1 | +1 | +4 |
| Invention | TSP | 25 | 6 | 0 | +1 | 28 | +1 | +1 | +3 |
| Invention | TSP | 40 | 7 | 0 | +1 | 29 | +1 | +1 | +3 |
| Invention | DSP | 15 | 8 | 0 | +1 | 30 | +1 | +1 | +3 |
| Invention | DSP | 7 | 9 | +1 | +1 | 31 | +1 | +1 | +4 |
| Hors Invention | $C_{12}$ | 23 | 10 | 0 | 0 | 32 | 0 | +1 | +1 |
| Hors Invention | $C_{16}C_{18}$ | 25 | 11 | +1 | 0 | 33 | +1 | 0 | +2 |
| Hors Invention | $C_{18}$ | 20 | 12 | +1 | 0 | 34 | +1 | -1 | +1 |
| Hors Invention | $C_{22}$ | 25 | 13 | +1 | -1 | 35 | +1 | -1 | 0 |
| Hors Invention | $C_{32}$ | 25 | 14 | -1 | -1 | 36 | +1 | -1 | -2 |
| Hors Invention | NP | 30 | 15 | - 1 | +1 | 37 | 0 | +1 | +1 |
| Hors Invention | Abiétate | 20 | 16 | -1 | +1 | 38 | 0 | 0 | 0 |
| Invention | TSP | 21,1 | 17 | 0 | +1 | 39 | +1 | +1 | +3 |
| Hors Invention | β naphtyl | 6,4 | 18 | -1 | +1 | 40 | 0 | +1 | +1 |
| Invention | TSP | 1,3 | 19 | +1 | +1 | 41 | +1 | +1 | +4 |
| Invention | TSP | 1,3 | 20 | +1 | +1 | 42 | +1 | +1 | +4 |
| Invention | TSP | 1,3 | 21 | +1 | +1 | 43 | +1 | +1 | +4 |
| Invention | TSP | 1,3 | 22 | 0 | +1 | 44 | +1 | +1 | +3 |

La lecture du tableau 3 permet de voir que seuls les polyuréthannes fonctionnalisés avec des groupements contenant au moins trois cycles aromatiques, c'est-à-dire que seuls des composés répondant à la formule (I) dans laquelle R et R' sont des groupes hydrocarbonés comportant au moins trois cycles aromatiques substitués ou non, permettent de développer des viscosités sous bas gradient de cisaillement important sans perdre en compatibilité pigmentaire, cette propriété étant conservée qu'il s'agisse de peinture mate ou de peinture satinée.

Les essais n° 1-23, 10-32, 11-33, 12-34, 13-35, 14-36, 15-37, 16-38 et 18-40 ne permettent d'atteindre les critères strictement définis (total des notations inférieur à 3) alors que les essais de l'invention n° 2-24, 3-25, 4-26, 5-27, 6-28, 7-29, 8-30, 9-31, 17-39, 19-41, 20-42, 21-43, et 22-44 répondent aux dits critères (total des notations supérieur ou égal à 3).

<u>EXEMPLE 3 :</u>

Cet exemple a pour but de mettre en évidence les propriétés rhéologiques et de compatibilité pigmentaire

apportées par les agents épaississants selon l'invention pour des formulations pour peinture mates, avec solvant à dosage variable et rhéologie constante.

Pour ce faire, pour les formulations apparaissant au tableau 4 qui suit, les modes opératoires et matériels mis en oeuvre dans les différents essais de cet exemple sont identiques à ceux mis en oeuvre dans l'exemple 1.

Essai n° 45 :

Cet essai illustre l'invention et met en oeuvre 0,60 % en poids sec, par rapport au poids total de la formulation, d'un composé de formule (I) dans laquelle :

DI est l'hexaméthylène di-isocyanate,
Le PEG est un polyéthylène glycol de poids moléculaire égal à 10 000,
n = 1,
x = x' = 1,3;
y = y' = z = z'= 0,
R = R' = TSP.

Essai n° 46 :

Cet essai illustre l'invention et met en oeuvre 0,75 % en poids sec, par rapport au poids total de la formulation, d'un composé de formule (I) dans laquelle :

DI est le toluène di-isocyanate,
Le PEG est un polyéthylène glycol de poids moléculaire égal à 10 000,
n = 1,
x=x'=1,3,
y = y'=z = z' = 0,
R=R'=TSP.

Essai n° 47 :

Cet essai illustre l'invention et met en oeuvre 0,56 % en poids sec, par rapport au poids total de la formulation, d'un composé de formule (I) dans laquelle :

DI est l'isophorone di-isocyanate,
Le PEG est un polyéthylène glycol de poids moléculaire égal à 20 000,
n = 1,
x = x' = 1,3,
y = y' = z = z' = 0,
R = R' = TSP.

Essai n° 48 :

Cet essai illustre l'invention et met en oeuvre 0,13 % en poids sec, par rapport au poids total de la formulation, d'un composé de formule (I) dans laquelle :

DI est le l'isophorone di-isocyanate,
Le PEG est un polyéthylène glycol de poids moléculaire égal à 10 000,
n = 1,
x = x' = 1,3,
y = y' = z = z' = 0,
R = R' = TSP.

Tous les résultats de viscosité Brookfield™ (à 10 et 100 trs/min.) et de viscosité Stormer, ainsi que les valeurs de L et de Delta E, pour des formulations de base pigmentées et relatifs aux essais précités sont rassemblés dans le tableau 4 suivant :

TABLEAU 4

| | Invention | Invention | Invention | Invention |
|---|---|---|---|---|
| **ESSAI N°** | **45** | **46** | **47** | **48** |
| Eau brute<br>Coatex P90 (40 %)<br>NH4OH<br>Mergal K6N<br>Byk 034<br>TiO2 RL 68<br>Hydrocarb<br>Ducal 2<br>Rhodopas DS 910<br>Monoéthylèneglycol<br>White Spirit | 271,3<br>3<br>2,3<br>2<br>1<br>40<br>207<br>316<br>120<br>10,2<br>10,2 | 266,8<br>3<br>2,3<br>2<br>1<br>40<br>207<br>316<br>120<br>10,2<br>10,2 | 272,3<br>3<br>2,3<br>2<br>1<br>40<br>207<br>316<br>120<br>10,2<br>10,2 | 284,5<br>3<br>2,3<br>2<br>1<br>40<br>207<br>316<br>120<br>10,2<br>10,2 |
| **Epaississants** | TSP OE1,3 HDI PEG 10000 | TSP OE1,3 TDI PEG 10000 | TSP OE1,3 IPDI PEG 20000 | TSP OE1,3 IPDI PEG 10000 |
| (Quantité d'épaississant (g) | 17 | 21,5 | 16 | 3,8 |
| Total (g) | 1000 | 1000 | 1000 | 1000 |
| % épaississant sec/formulation totale | 0,6 | 0,75 | 0,56 | 0,13 |
| pH | 9,6 | 9,6 | 9,6 | 9,6 |
| Viscosité Brookfield 10 t/mn<br>(mPa.s) 100 t/mn<br>T = 24 h Visco. Stormer (KU) | 2700<br>2100<br>97 | 2500<br>1500<br>89 | 2800<br>1700<br>88 | 3700<br>900<br>71 |
| Viscosité Brookfield 10 t/mn<br>(mPa.s) 100 t/mn<br>T = 1 sem. Visco. Stormer (KU) | 3200<br>2400<br>100 | 3300<br>2100<br>86 | 3100<br>1700<br>89 | 4600<br>1200<br>78 |
| Viscosité Brookfield 10 t/mn<br>(mPa.s) 100 t/mn<br>T = 1 sem. 50°C Visco. Stormer (KU) | 3500<br>2600<br>104 | 3400<br>2500<br>91 | 2900<br>1800<br>92 | 3900<br>1000<br>76 |
| Viscosité Brookfield 10 t/mn<br>(mPa.s) 100 t/mn<br>T = 1 mois Visco. Stormer (KU) | 2800<br>2000<br>96 | 2400<br>1500<br>88 | 2700<br>1500<br>86 | 3200<br>1000<br>75 |
| Viscosité Brookfield 10 t/mn<br>(mPa.s) 100 t/mn<br>T = 1 mois 50°C Visco. Stormer (KU) | 3100<br>2400<br>102 | 3200<br>2100<br>90 | 2800<br>1700<br>89 | 3100<br>800<br>75 |
| Compatibilité pigmentaire (addition de 5 % en poids de pate pigmentaire noire) | | | | |
| Delta E | 0,3 | 0,4 | 1,4 | 0,3 |
| L | 31,9 | 32,0 | 30,2 | 32,8 |

La lecture du tableau 4 permet d'attribuer les notations $\Delta E_{mate}$ et $\eta_{mate}$ aux différents essais.

Ainsi,

pour l'essai n° 45 : la notation $\eta_{mate}$ est égale à 0 et la notation $\Delta E_{mate}$ est égale à + 1 donnant un total ($\Delta E_{mate}$ + $\eta_{mate}$) égal à + 1 ;

pour l'essai n° 46 : la notation $\eta_{mate}$ est égale à 0 et la notation $\Delta E_{mate}$ est égale à + 1 donnant un total ($\Delta E_{mate}$ + $\eta_{mate}$) égal à + 1 ;

(suite)

pour l'essai n° 47 : la notation $\eta_{mate}$ est égale à 0 et la notation $\Delta E_{mate}$ est égale à + 1 donnant un total ($\Delta E_{mate}$ + $\eta_{mate}$) égal à + 1 ;

pour l'essai n° 48 : la notation $\eta_{mate}$ est égale à + 1 et la notation $\Delta E_{mate}$ est égale à + 1 donnant un total ($\Delta E_{mate}$ + $\eta_{mate}$) égal à + 2 ;

EXEMPLE 4 :

Cet exemple a pour but de mettre en évidence les propriétés rhéologiques et de compatibilité pigmentaire apportées par les agents épaississants selon l'invention pour des formulations pour peinture satinées, avec solvant à dosage variable et rhéologie constante.

Pour ce faire, pour les formulations apparaissant au tableau 5 qui suit, les modes opératoires et matériels mis en oeuvre dans les différents essais de cet exemple sont identiques à ceux mis en oeuvre dans l'exemple 2.

Essai n° 49 :

Cet essai illustre l'invention et met en oeuvre 0,12 % en poids sec, par rapport au poids total de la formulation, d'un composé de formule (I) dans laquelle :

DI est l'hexaméthylène di-isocyanate,
Le PEG est un polyéthylène glycol de poids moléculaire égal à 10 000,
n = 1,
x = x' = 1,3;
y = y' = z = z' = 0,
R = R' = TSP.

Essai n° 50 :

Cet essai illustre l'invention et met en oeuvre 0,12 % en poids sec, par rapport au poids total de la formulation, d'un composé de formule (I) dans laquelle :

DI est le toluène di-isocyanate,
Le PEG est un polyéthylène glycol de poids moléculaire égal à 10 000,
n=1,
x=x'=1,3,
y=y'=z=z'=0,
R=R'=TSP.

Essai n° 51 :

Cet essai illustre l'invention et met en oeuvre 0,105 % en poids sec, par rapport au poids total de la formulation, d'un composé de formule (I) dans laquelle :

DI est l'isophorone di-isocyanate,
Le PEG est un polyéthylène glycol de poids moléculaire égal à 20 000,
n = 1,
x = x' = 1,3,
y = y' = z = z' = 0,
R=R'=TSP.

Essai n° 52 :

Cet essai illustre l'invention et met en oeuvre 0,04 % en poids sec, par rapport au poids total de la formulation, d'un composé de formule (I) dans laquelle :

DI est le l'isophorone di-isocyanate,
Le PEG est un polyéthylène glycol de poids moléculaire égal à 10 000,

n = 1,
x = x' = 1,3,
y = y' = z = z' = 0,
R = R' = TSP.

Tous les résultats de viscosité Brookfield™ (à 10 et 100 trs/min.) et de viscosité Stormer, ainsi que les valeurs de L et de Delta E, pour des formulations de base pigmentées et relatifs aux essais précités sont rassemblés dans le tableau 5 suivant :

TABLEAU 5

| | | Invention | Invention | Invention | Invention |
|---|---|---|---|---|---|
| **ESSAI N°** | | **49** | **50** | **51** | **52** |
| Eau brute | | 136,5 | 136,5 | 137 | 135 |
| Coatex BR 3 (40 %) | | 5 | 5 | 5 | 5 |
| Tego 1488 | | 2 | 2 | 2 | 2 |
| B.D.G. | | 25 | 25 | 25 | 25 |
| M.P.G. | | 15 | 15 | 15 | 15 |
| Mergal K6N | | 3 | 3 | 3 | 3 |
| TiO2 RHD2 | | 200 | 200 | 200 | 200 |
| Hydrocarb | | 150 | 150 | 150 | 150 |
| Acronal 290D | | 450 | 450 | 450 | 450 |
| Texanol | | 10 | 10 | 10 | 10 |
| Epaississants | | TSP OE1,3 HDI PEG 10000 | TSP OE1,3 TDI PEG 10000 | TSP OE1,3 IPDI PEG 20000 | TSP OE1,3 IPDI PEG 10000 |
| Quantité d'épaississant (g) | | 3,5 | 3,5 | 3 | 1 |
| Total (g) | | 1000 | 1000 | 1000 | 1000 |
| % épaississant sec/formulation totale | | 0,12 | 0,12 | 0,105 | 0,04 |
| pH | | 8,4 | 8,4 | 8,4 | 8,4 |
| Viscosité Brookfield | 10 t/mn | 3100 | 2700 | 3000 | 3100 |
| (mPa.s) | 100 t/mn | 1500 | 1100 | 1200 | 1200 |
| T = 24 h | Visco. Stormer (KU) | 85 | 79 | 80 | 81 |
| Viscosité Brookfield | 10 t/mn | 3400 | 3100 | 3300 | 3200 |
| (mPa.s) | 100 t/mn | 1700 | 1200 | 1300 | 1300 |
| T = 1 sem. | Visco. Stormer (KU) | 86 | 80 | 81 | 81 |
| Viscosité Brookfield | 10 t/mn | 4100 | 3400 | 4000 | 3700 |
| (mPa.s) | 100 t/mn | 1900 | 1200 | 1400 | 1400 |
| T = 1 sem. 50°C | Visco. Stormer (KU) | 92 | 85 | 87 | 86 |
| Viscosité Brookfield | 10 t/mn | 3500 | 3500 | 3400 | 3300 |
| (mPa.s) | 100 t/mn | 1800 | 1300 | 1400 | 1300 |
| T = 1 mois | Visco. Stormer (KU) | 86 | 81 | 82 | 81 |
| Viscosité Brookfield | 10 t/mn | 4400 | 3600 | 4200 | 3800 |
| (mPa.s) | 100 t/mn | 2000 | 1200 | 1500 | 1500 |
| T = 1 mois 50°C | Visco. Stormer (KU) | 91 | 84 | 88 | 87 |
| Compatibilité pigmentaire (addition de 5 % en poids de pate pigmentaire noire) | | | | | |
| Delta E | | 0,4 | 0,4 | 0,2 | 0,4 |
| L | | 35,1 | 35,9 | 35,0 | 35,0 |

La lecture du tableau 5 permet d'attribuer les notations $\Delta E_{mate}$ et $\eta_{mate}$ aux différents essais.

Ainsi,

- pour l'essai n° 49 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;
- pour l'essai n° 50 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;
- pour l'essai n° 51 : la notation $\eta_{satinée}$ est égale à + 1 et la notation $\Delta E_{satinée}$ est égale à + 1 donnant un total ($\Delta E_{satinée}$ + $\eta_{satinée}$) égal à + 2 ;
- pour l'essai n° 52 : la notation $\eta_{satinée}$ est égale à + 1 et la notation $\Delta E_{satinée}$ est égale à + 1 donnant un total ($\Delta E_{satinée}$ +$\eta_{satinée}$) égal à + 2 ;

La somme des totaux des notations de l'exemple 3 relatif aux peintures mates et de l'exemple 4 relatif aux peintures satinées est rassemblée dans le tableau 6 suivant :

TABLEAU 6

| | | | PEINTURE MATE | | | PEINTURE SATINEE | | | TOTAL |
|---|---|---|---|---|---|---|---|---|---|
| | GROUPE R | x+y+z x'+y'+z' | Essai n° | Notation η mate | Notation ΔE mate | Essai n° | Notation η satinée | Notation ΔE satinée | (η mate + ΔE mate) + (η satinée + ΔE satinée) |
| Invention | TSP | 1,3 | 45 | 0 | +1 | 49 | +1 | +1 | +3 |
| Invention | TSP | 1,3 | 46 | 0 | +1 | 50 | +1 | +1 | +3 |
| Invention | TSP | 1,3 | 47 | 0 | +1 | 51 | +1 | +1 | +3 |
| Invention | TSP | 1,3 | 48 | + 1 | +1 | 52 | +1 | +1 | +4 |

La lecture du tableau 6 permet de voir que les composés selon l'invention permettent d'atteindre les critères strictement définis pour différentes doses et plus particulièrement pour des doses variant de 0,1 % à 2 % en poids sec du dit composé épaississant par rapport à la masse totale de la composition.

L'invention couvre également tous les modes de réalisation et toutes les applications qui seront directement accessibles à l'homme du métier à la lecture de la présente demande, de ses connaissances propres, et éventuellement d'essais simples de routine.

## Revendications

1. Utilisation de composé à chaîne d'oxyde d'alkylène comme épaississant de compositions aqueuses, chargées et/ou pigmentées, blanches ou colorées dans le but de fournir des compositions pigmentaires pour peintures mates et satinées qui assurent une excellente compatibilité pigmentaire et une haute viscosité à bas et moyen gradient de cisaillement, **caractérisée en ce que** ledit composé est à base de motifs poly-isocyanate, préférentiellement di-isocyanate et comporte en bout de chaîne des groupements hydrocarbonés comportant eux-mêmes au moins trois cycles aromatiques substitués ou non.

2. Utilisation de composé à chaîne d'oxyde d'alkylène comme épaississant de compositions aqueuses, chargées et/ou pigmentées, blanches ou colorées selon la revendication 1, **caractérisée en ce que** ledit composé répond à la formule (I) ci-dessous :

$$R\text{- }O\text{-}(OE)_x\text{-}(OP)_y\text{-}(OE)_z\text{-}O\text{-}DI\text{-}(\text{-}PEG\text{-}DI\text{-})_n\text{-}O\text{-}(OE)_{x'}\text{-}(OP)_{y'}\text{-}(OE)_{z'}\text{-}O\text{-}R'$$

dans laquelle :

R et R' sont des groupes hydrocarbonés comportant au moins trois cycles aromatiques, substitués ou non et

sont différents ou identiques,
DI est un groupe di-isocyanate tel que le toluène di-isocyanate, l'isophorone di-isocyanate ou l'hexaméthylène di-isocyanate,
PEG est un groupe polyéthylène glycol de poids moléculaire allant de 6 000 à 20 000,
n est compris entre 1 et 40,
x, z, x', z' est compris entre 1 et 40,
y, y' est compris entre 0 et 40,
avec x + y + z + x' + y' + z' compris entre 2 et 80.

3. Utilisation de composé à chaîne d'oxyde d'alkylène comme épaississant de compositions aqueuses, chargées et/ou pigmentées, blanches ou colorées selon la revendication 2, **caractérisée en ce que** le poids moléculaire du PEG est compris entre 6 000 et 15 000, de préférence voisin de 10 000.

4. Utilisation de composé à chaîne d'oxyde d'alkylène comme épaississant de compositions aqueuses, chargées et/ou pigmentées, blanches ou colorées selon l'une des revendications 2 à 3, **caractérisée en ce que** n est voisin de 1.

5. Utilisation de composé à chaîne d'oxyde d'alkylène comme épaississant de compositions aqueuses, chargées et/ou pigmentées, blanches ou colorées selon l'une des revendications 2 à 4, **caractérisée en ce que** les groupes R et R' sont un groupe tristyrylphényle (TSP) de formule :

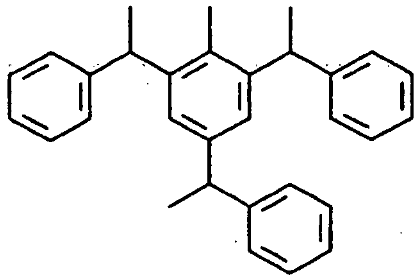

avec x + x' + y + y' + z + z' compris entre 2 et 80 inclus
ou un groupe distyrylphényle (DSP) de formule

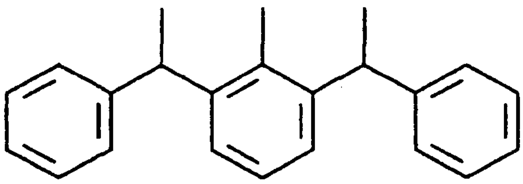

ou

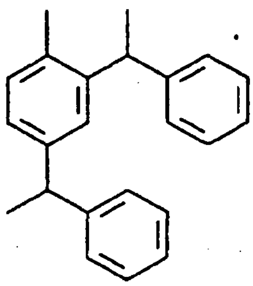

6. Utilisation de composé à chaîne d'oxyde d'alkylène comme épaississant de compositions aqueuses, chargées et/ou pigmentées, blanches ou colorées selon l'une des revendications 2 à 5, **caractérisée en ce que** R = R' = TSP et

**en ce que** x + y + z + x' + y' + z' est compris entre 2 et 50 avec y = y' = z = z' = 0.

7. Utilisation de composé à chaîne d'oxyde d'alkylène comme épaississant de compositions aqueuses, chargées et/ou pigmentées, blanches ou colorées selon l'une des revendications 2 à 5, **caractérisée en ce que** x = x' = 1,3.

8. Utilisation de composé à chaîne d'oxyde d'alkylène comme épaississant de compositions aqueuses, chargées et/ou pigmentées, blanches ou colorées selon l'une des revendications 2 à 5, **caractérisée en ce que** n = x = x' = 1 et y = y' = z = z' = 0.

9. Utilisation de composé à chaîne d'oxyde d'alkylène comme épaississant de compositions aqueuses, chargées et/ou pigmentées, blanches ou colorées selon l'une des revendications 2 à 4, **caractérisée en ce que** les groupes R et R' sont substitués et préférentiellement substitués par un substituant choisis parmi les groupes phényle, benzyle, ou alkyle linéaire ou ramifié comportant un nombre quelconque d'atomes de carbone.

10. Utilisation de composé à chaîne d'oxyde d'alkylène comme épaississant de compositions aqueuses, chargées et/ou pigmentées, blanches ou colorées selon la revendication 9, **caractérisée en ce que** le ou lesdits substituants sont disposés sur les groupes aromatiques.

11. Utilisation de composé à chaîne d'oxyde d'alkylène comme épaississant de compositions aqueuses, chargées et/ou pigmentées, blanches ou colorées selon la revendication 10, **caractérisée en ce que** les substituants portés par les groupes aromatiques des groupes R et R' sont eux-mêmes substitués.

12. Utilisation de composé à chaîne d'oxyde d'alkylène comme épaississant de compositions aqueuses, chargées et/ou pigmentées, blanches ou colorées selon la revendication 4, **caractérisée en ce que** le groupe TSP est lui même substitué par un groupe styryle, le groupe R étant alors un groupe tétrastyrylphényle.

13. Utilisation de composé à chaîne d'oxyde d'alkylène comme épaississant de compositions aqueuses, chargées et/ou pigmentées, blanches ou colorées selon la revendication 4, **caractérisée en ce que** le groupe TSP est substitué sur un groupe styryle par un groupe cyclohexanyle.

14. Epaississant non ionique de compositions aqueuses, chargées et/ou pigmentées, blanches ou colorées, **caractérisé en ce que** ledit épaississant est un composé à base de motifs poly-isocyanate, préférentiellement di-isocyanate et comporte en bout de chaîne des groupements hydrocarbonés comportant eux-mêmes au moins trois radicaux aromatiques substitués ou non, et **caractérisé en ce que** ledit épaississant répond à la formule (I) ci-dessous : R-O-$(OE)_x$-$(OP)_y$-$(OE)_z$-O-DI-(-PEG-DI-$)_n$-O-$(OE)_{x'}$-$(OP)_{y'}$ $(OE)_{z'}$-O-R' dans laquelle : R et R' sont des groupes hydrocarbonés comportant au moins trois cycles aromatiques, substitués ou non et sont différents ou identiques, DI est un groupe di-isocyanate tel que le toluène di-isocyanate, l'isophorone di-isocyanate ou l'hexaméthylène di-isocyanate, PEG est un groupe polyéthylène glycol de poids moléculaire allant de 6 000 à 20 000, n est compris entre 1 et 40, x, z, x', z' est compris entre 1 et 40, y, y' est compris entre 0 et 40, avec x + y + z + x'+ y' + z' compris entre 2 et 80.

15. Epaississant non ionique de compositions aqueuses, chargées et/ou pigmentées, blanches ou colorées selon la revendication 14, **caractérisée en ce que** le poids moléculaire du PEG est compris entre 6 000 et 15 000, de préférence voisin de 10000.

16. Epaississant non ionique de compositions aqueuses, chargées et/ou pigmentées, blanches ou colorées selon l'une des revendications 14 à 15, **caractérisée en ce que** n est voisin de 1.

17. Epaississant non ionique de compositions aqueuses, chargées et/ou pigmentées, blanches ou colorées selon l'une des revendications 14 à 16, **caractérisée en ce que** les groupes R et R' sont un groupe tristyrylphényle (TSP) de formule :

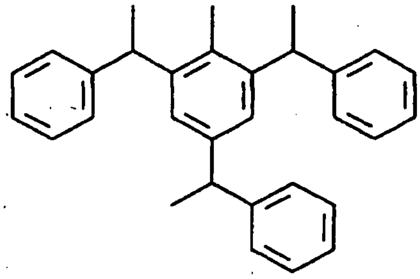

avec x + x' + y + y' + z + z' compris entre 2 et 80 inclus ou un groupe distyrylphényle (DSP) de formule

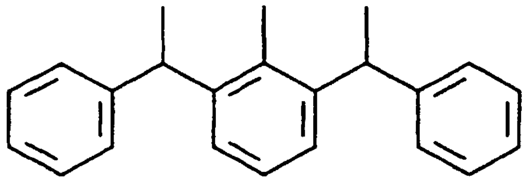

ou

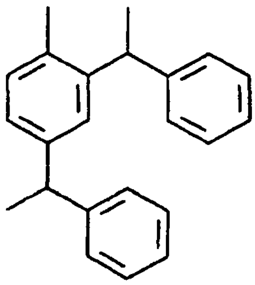

**18.** Epaississant non ionique de compositions aqueuses, chargées et/ou pigmentées, blanches ou colorées selon l'une des revendication 14 à 17, **caractérisée en ce que** R = R' = TSP et **en ce que** x + y + z + x' + y' + z' est compris entre 2 et 50 avec y = y' = z = z' = 0.

**19.** Epaississant non ionique de compositions aqueuses, chargées et/ou pigmentées, blanches ou colorées selon l'une des revendications 14 à 17, **caractérisée en ce que** x = x' = 1,3.

**20.** Epaississant non ionique de compositions aqueuses, chargées et/ou pigmentées, blanches ou colorées selon l'une des revendications 14 à 17, **caractérisée en ce que** n = x = x' = 1 et y = y' = z = z' = 0.

**21.** Epaississant non ionique de compositions aqueuses, chargées et/ou pigmentées, blanches ou colorées selon l'une des revendications 14 à 16, **caractérisée en ce que** le groupe R et R' sont substitués et préférentiellement substitué par un substituant choisis parmi les groupes phényle, benzyle, ou alkyle linéaire ou ramifié comportant un nombre quelconque d'atomes de carbone.

**22.** Epaississant non ionique de compositions aqueuses, chargées et/ou pigmentées, blanches ou colorées selon la revendication 21, **caractérisée en ce que** le ou lesdits substituants sont disposés sur les groupes aromatiques.

**23.** Epaississant non ionique de compositions aqueuses, chargées et/ou pigmentées, blanches ou colorées selon la revendication 22, **caractérisée en ce que** les substituants portés par les groupes aromatiques des groupes R et

R' sont eux mêmes substitués.

24. Epaississant non ionique de compositions aqueuses, chargées et/ou pigmentées, blanches ou colorées selon la revendication 17, **caractérisée en ce que** le groupe TSP est lui même substitué par un groupe styryle, le groupe R étant alors un groupe tétrastyrylphényle.

25. Utilisation de composé à chaîne d'oxyde d'alkylène comme épaississant de compositions aqueuses, chargées et/ou pigmentées, blanches ou colorées selon la revendication 17, **caractérisée en ce que** le groupe TSP est substitué sur un groupe styryle par un groupe cyclohexanyle.

26. Composition aqueuse, chargée et/ou pigmentée, blanche ou colorée, **caractérisée en ce qu'**elle contient le copolymère épaississant selon l'une quelconque des revendications 13 à 25, préférentiellement de 0,1 % à 2 % en poids sec, très préférentiellement de 0,2 % à 1,0 % en poids sec dudit copolymère épaississant par rapport à la masse totale de la composition.

## Patentansprüche

1. Verwendung einer Verbindung mit Alkylenoxidkette als Verdickungsmittel in wässrigen Zusammensetzungen, die Füllstoffe und/oder Pigmente umfassen und weiß oder farbig sind, um Pigmentzusammensetzungen für Anstrichmittel mit Matt- oder Satinglanz zu erhalten, die eine ausgezeichnete Pigmentverträglichkeit und eine hohe Viskosität bei einer niedrigen bis mittleren Schergeschwindigkeit sicherstellen, **dadurch gekennzeichnet, dass** die Verbindung auf Polyisocyanat-Bausteinen beruht, bei denen es sich vorzugsweise um Diisocyanat handelt, und sie am Kettenende Kohlenwasserstoffgruppen aufweist, die wiederum mindestens drei substituierte oder unsubstituierte Ringe aufweisen.

2. Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 1, **dadurch gekennzeichnet, dass** die Verbindung der untenstehenden Formel (I) entspricht:

$$R\text{-}O\text{-}(OE)_x(OP)_y(OE)_zO\text{-}DI\text{-}(\text{-}PEG\text{-}DI\text{-})_n\text{-}O\text{-}(OE)_{x'}\text{-}(OP)_{y'}\text{-}(OE)_{z'}\text{-}O\text{-}R'$$

wobei:

R und R' kohlenwasserstoffhaltige Gruppen sind, die mindestens drei aromatische Ringe aufweisen, welche substituiert oder unsubstituiert sind und welche verschiedenartig oder gleichartig sind,
DI eine Diisocyanatgruppe wie etwa Toluoldiisocyanat, Isophorondiisocyanat oder Hexamethylendiisocyanat ist,
PEG eine Polyethylenglykol-Gruppe mit einem Molekulargewicht von 6.000 bis 20.000 ist,
n im Bereich von 1 bis 40 liegt,
x, z, x', z' im Bereich von 1 bis 40 liegen,
y, y' im Bereich von 0 bis 40 liegen,
wobei x + y + z + x' + y' + z' im Bereich von 2 bis 80 liegt.

3. Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 2, **dadurch gekennzeichnet, dass** Molekulargewicht des PEG im Bereich von 6.000 bis 15.000 liegt und bevorzugt näherungsweise 10.000 beträgt.

4. Verwendung einer Verbindung mit Alkylenoxidkette als Verdickungsmittel in wässrigen Zusammensetzungen, die Füllstoffe und/oder Pigmente umfassen und weiß oder farbig sind, nach einem der Ansprüche 2 bis 3, **dadurch gekennzeichnet, dass** n näherungsweise 1 beträgt.

5. Verwendung einer Verbindung mit Alkylenoxidkette als Verdickungsmittel in wässrigen Zusammensetzungen, die Füllstoffe und/oder Pigmente umfassen und weiß oder farbig sind, nach einem der Ansprüche 2 bis 4, **dadurch gekennzeichnet, dass** es sich bei den Gruppen R und R' um eine Tristyrylphenylgruppe (TSP) mit der folgenden Formel:

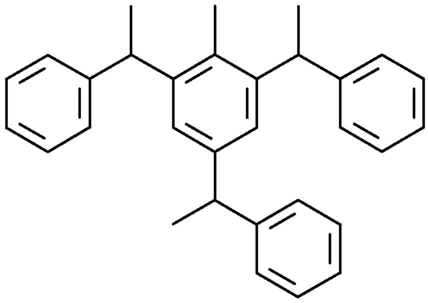

wobei x + x' + y + y' + z + z' im Bereich von 2 bis 80 einschließlich der Grenzwerte liegt, oder um eine Distyrylphenylgruppe (DSP) mit dieser

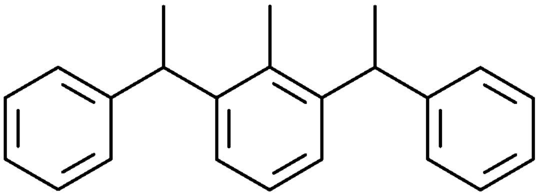

oder mit der folgenden Formel handelt:

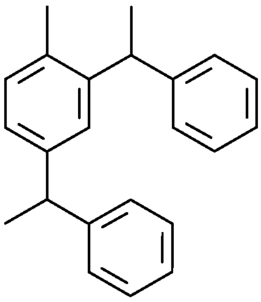

6. Verwendung einer Verbindung mit Alkylenoxidkette als Verdickungsmittel in wässrigen Zusammensetzungen, die Füllstoffe und/oder Pigmente umfassen und weiß oder farbig sind, nach einem der Ansprüche 2 bis 5, **dadurch gekennzeichnet, dass** R = R' = TSP ist und dadurch, dass x + y + z + x' + y' + z' im Bereich von 2 bis 50 liegt, wobei y = y' = z = z' = 0 ist.

7. Verwendung einer Verbindung mit Alkylenoxidkette als Verdickungsmittel in wässrigen Zusammensetzungen, die Füllstoffe und/oder Pigmente umfassen und weiß oder farbig sind, nach einem der Ansprüche 2 bis 5, **dadurch gekennzeichnet, dass** x = x' = 1,3 ist.

8. Verwendung einer Verbindung mit Alkylenoxidkette als Verdickungsmittel in wässrigen Zusammensetzungen, die Füllstoffe und/oder Pigmente umfassen und weiß oder farbig sind, nach einem der Ansprüche 2 bis 5, **dadurch gekennzeichnet**, dassn=x=x'=1 und y=y'=z=z'=0 ist.

9. Verwendung einer Verbindung mit Alkylenoxidkette als Verdickungsmittel in wässrigen Zusammensetzungen, die Füllstoffe und/oder Pigmente umfassen und weiß oder farbig sind, nach einem der Ansprüche 2 bis 4, **dadurch gekennzeichnet, dass** die Gruppen R und R' substituiert sind, wobei sie vorzugsweise mit einem Substituenten substituiert sind, welcher aus den Phenyl-, Benzyl- oder den geradkettigen oder verzweigten Alkylgruppen mit einer beliebigen Anzahl von Kohlenstoffatomen ausgewählt ist.

10. Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 9, **dadurch gekennzeichnet, dass** die Substituenten an den aromatischen Gruppen angeordnet sind.

**11.** Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 10, **dadurch gekennzeichnet, dass** die Substituenten, welche sich an den Gruppen R und R' befinden, ihrerseits substituiert sind.

**12.** Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 4, **dadurch gekennzeichnet, dass** die Gruppe TSP ihrerseits mit einer Styrylgruppe substituiert ist, wobei die Gruppe R in diesem Falle eine Tetrastyrylphenylgruppe ist.

**13.** Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 4, **dadurch gekennzeichnet, dass** die Gruppe TSP an einer Styrylgruppe mit einer Cyclohexanylgruppe substituiert ist.

**14.** Nichtionisches Verdickungsmittel für wässrige Zusammensetzungen, die Füllstoffe und/oder Pigmente umfassen und weiß oder farbig sind, **dadurch gekennzeichnet, dass** das es sich bei dem Verdickungsmittel um eine Verbindung handelt, die auf Polyisocyanat-Bausteinen beruht, welche vorzugsweise Diisocyanat entsprechen, und sie am Kettenende kohlenwasserstoffhaltige Gruppen aufweist, die wiederum mindestens drei substituierte oder unsubstituierte aromatische Reste aufweisen, und **dadurch gekennzeichnet, dass** das Verdickungsmittel der untenstehenden Formel (I) entspricht:

$$R\text{-}O\text{-}(OE)_x\text{-}(OP)_y\text{-}(OE)_z\text{-}O\text{-}DI\text{-}(\text{-}PEG\text{-}DI\text{-})_n\text{-}O\text{-}(OE)_{x'}\text{-}(OP)_{y'}\text{-}(OE)_{z'}\text{-}O\text{-}R'$$

wobei:

R und R' kohlenwasserstoffhaltige Gruppen sind, die mindestens drei aromatische Ringe aufweisen, welche substituiert oder unsubstituiert sind und welche verschiedenartig oder gleichartig sind,
DI eine Diisocyanatgruppe wie etwa Toluoldiisocyanat, Isophorondiisocyanat oder Hexamethylendiisocyanat ist,
PEG eine Polyethylenglykol-Gruppe mit einem Molekulargewicht von 6.000 bis 20.000 ist,
n im Bereich von 1 bis 40 liegt,
x, z, x', z' im Bereich von 1 bis 40 liegen,
y, y' im Bereich von 0 bis 40 liegen,
wobei x + y + z + x' + y' + z' im Bereich von 2 bis 80 liegt.

**15.** Nichtionisches Verdickungsmittel für wässrige Zusammensetzungen, die Füllstoffe und/oder Pigmente umfassen und weiß oder farbig sind, nach Anspruch 14, **dadurch gekennzeichnet, dass** Molekulargewicht des PEG im Bereich von 6.000 bis 15.000 liegt und bevorzugt näherungsweise 10.000 beträgt.

**16.** Nichtionisches Verdickungsmittel für wässrige Zusammensetzungen, die Füllstoffe und/oder Pigmente umfassen und weiß oder farbig sind, nach einem der Ansprüche 14 bis 15, **dadurch gekennzeichnet, dass** n näherungsweise 1 beträgt.

**17.** Nichtionisches Verdickungsmittel für wässrige Zusammensetzungen, die Füllstoffe und/oder Pigmente umfassen und weiß oder farbig sind, nach einem der Ansprüche 14 bis 16, **dadurch gekennzeichnet, dass** es sich bei den Gruppen R und R' um eine Tristyrylphenylgruppe (TSP) mit der folgenden Formel:

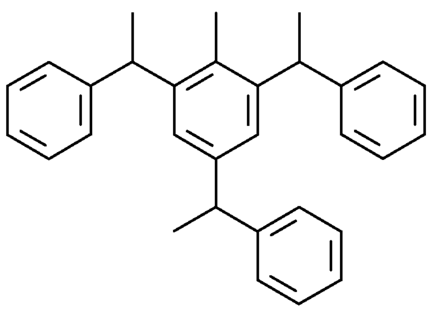

wobei x + x' + y + y' + z + z' im Bereich von 2 bis 80 einschließlich der Grenzwerte liegt,
oder um eine Distyrylphenylgruppe (DSP) mit dieser

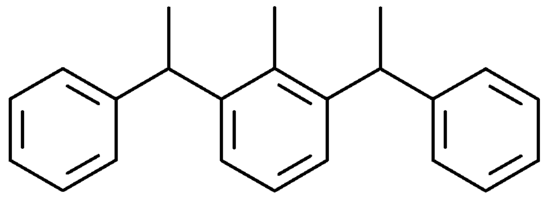

oder mit der folgenden Formel handelt:

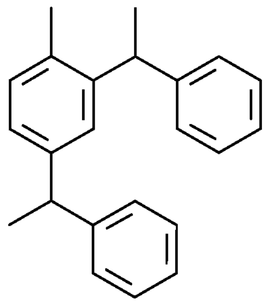

**18.** Nichtionisches Verdickungsmittel für wässrige Zusammensetzungen, die Füllstoffe und/oder Pigmente umfassen und weiß oder farbig sind, nach einem der Ansprüche 14 bis 17, **dadurch gekennzeichnet, dass** R = R' = TSP ist und dadurch, dass x + y + z + x' + y' + z' im Bereich von 2 bis 50 liegt, wobei y = y' = z = z' = 0 ist.

**19.** Nichtionisches Verdickungsmittel für wässrige Zusammensetzungen, die Füllstoffe und/oder Pigmente umfassen und weiß oder farbig sind, nach einem der Ansprüche 14 bis 17, **dadurch gekennzeichnet, dass** x = x' = 1,3 ist.

**20.** Nichtionisches Verdickungsmittel für wässrige Zusammensetzungen, die Füllstoffe und/oder Pigmente umfassen und weiß oder farbig sind, nach einem der Ansprüche 14 bis 17, **dadurch gekennzeichnet, dass** n = x = x' = 1 und y = y' = z = z' = 0 ist.

**21.** Nichtionisches Verdickungsmittel für wässrige Zusammensetzungen, die Füllstoffe und/oder Pigmente umfassen und weiß oder farbig sind, nach einem der Ansprüche 14 bis 16, **dadurch gekennzeichnet, dass** die Gruppen R und R' substituiert sind, wobei sie vorzugsweise mit einem Substituenten substituiert sind, welcher aus den Phenyl-, Benzyl- oder den geradkettigen oder verzweigten Alkylgruppen mit einer beliebigen Anzahl von Kohlenstoffatomen ausgewählt ist.

**22.** Nichtionisches Verdickungsmittel für wässrige Zusammensetzungen, die Füllstoffe und/oder Pigmente umfassen und weiß oder farbig sind, nach Anspruch 21, **dadurch gekennzeichnet, dass** die Substituenten an den aromatischen Gruppen angeordnet sind.

**23.** Nichtionisches Verdickungsmittel für wässrige Zusammensetzungen, die Füllstoffe und/oder Pigmente umfassen und weiß oder farbig sind, nach Anspruch 22, **dadurch gekennzeichnet, dass** die Substituenten, welche sich an den Gruppen R und R' befinden, ihrerseits substituiert sind.

**24.** Nichtionisches Verdickungsmittel für wässrige Zusammensetzungen, die Füllstoffe und/oder Pigmente umfassen und weiß oder farbig sind, nach Anspruch 17, **dadurch gekennzeichnet, dass** die Gruppe TSP ihrerseits mit einer Styrylgruppe substituiert ist, wobei die Gruppe R in diesem Falle eine Tetrastyrylphenylgruppe ist.

**25.** Verwendung einer Verbindung mit Alkylenoxidkette als Verdickungsmittel in wässrigen Zusammensetzungen, die Füllstoffe und/oder Pigmente umfassen und weiß oder farbig sind, nach Anspruch 17, **dadurch gekennzeichnet, dass** die Gruppe TSP an einer Styrylgruppe mit einer Cyclohexanylgruppe substituiert ist.

**26.** Wässrige Zusammensetzung, die Füllstoffe und/oder Pigmente umfassen und weiß oder farbig sind, **dadurch gekennzeichnet, dass** sie das verdickend wirkende Copolymer nach einem beliebigen der Ansprüche 13 bis 25 enthält, wobei das verdickend wirkende Copolymer vorzugsweise 0,1 % bis 2 % nach Trockengewicht, mit starkem Vorzug zu 0,2 % bis 1,0 % nach Trockengewicht ausmacht, unter Bezugnahme auf die Gesamtmasse der Zusammensetzung.

## Claims

1. Use of a compound with an alkylene oxide chain as a thickener of aqueous compositions, containing a filler and/or pigmented, white or coloured, with the aim of supplying pigmentary compositions for matt and silk finish paints, which provide excellent pigmentary compatibility and a high viscosity at small and medium shear stress gradient, **characterised in that** said compound is based on polyisocyanate units, preferentially diisocyanate units, and has, at the chain end, hydrocarbon groups themselves having at least three aromatic cycles, substituted or not.

2. Use of a compound with an alkylene oxide chain as a thickener of aqueous compositions, containing a filler and/or pigmented, white or coloured, according to Claim 1, **characterised in that** said compound fits the formula (I) below:

$$R\text{-}O\text{-}(OE)_x\text{-}(OP)_y\text{-}(OE)_z\text{-}O\text{-}DI\text{-}(\text{-}PEG\text{-}DI\text{-})_n\text{-}O\text{-}(OE)_{x'}\text{-}(OP)_{y'}\text{-}(OE)_{z'}\text{-}O\text{-}R'$$

in which:

R and R' are hydrocarbon groups having at least three aromatic cycles, substituted or not, and are different or identical;
DI is a diisocyanate group such as toluene diisocyanate, isophorone diisocyanate or hexamethylene diisocyanate;
PEG is a polyethylene glycol group of molecular weight ranging from 6,000 to 20,000;
n is between 1 and 40;
x, z, x', z' are between 1 and 40;
y, y' are between 0 and 40;
with x + y + z + x' + y' + z' between 2 and 80.

3. Use of a compound with an alkylene oxide chain as a thickener of aqueous compositions, containing a filler and/or pigmented, white or coloured, according to Claim 2, **characterised in that** the molecular weight of the PEG is between 6,000 and 15,000, preferably close to 10,000.

4. Use of a compound with an alkylene oxide chain as a thickener of aqueous compositions, containing a filler and/or pigmented, white or coloured, according to one of Claims 2 to 3, **characterised in that** n is close to 1.

5. Use of a compound with an alkylene oxide chain as a thickener of aqueous compositions, containing a filler and/or pigmented, white or coloured, according to one of Claims 2 to 4, **characterised in that** the R and R' groups are a tristyrylphenyl (TSP) group with formula:

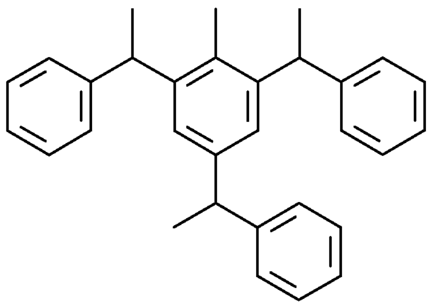

with x + x' + y + y' + z + z' between 2 and 80 inclusive
or a distyrylphenyl (DSP) group with formula

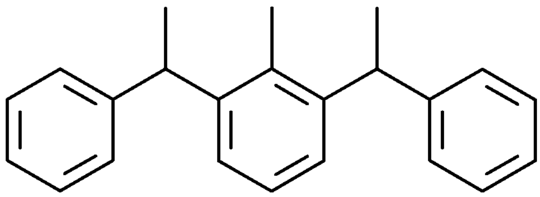

or

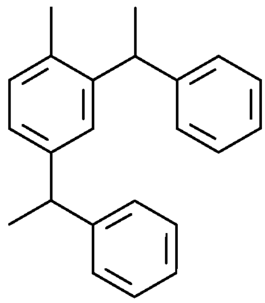

**6.** Use of a compound with an alkylene oxide chain as a thickener of aqueous compositions, containing a filler and/or pigmented, white or coloured, according to one of Claims 2 to 5, **characterised in that** R = R' = TSP, and **in that** x + y + z + x' + y' + z' is between 2 and 50 with y = y' = z = z' = 0.

**7.** Use of a compound with an alkylene oxide chain as a thickener of aqueous compositions, containing a filler and/or pigmented, white or coloured, according to one of Claims 2 to 5, **characterised in that** x = x' = 1.3.

**8.** Use of a compound with an alkylene oxide chain as a thickener of aqueous compositions, containing a filler and/or pigmented, white or coloured, according to one of Claims 2 to 5, **characterised in that** n = x = x' = 1 and y = y' = z = z' = 0.

**9.** Use of a compound with an alkylene oxide chain as a thickener of aqueous compositions, containing a filler and/or pigmented, white or coloured, according to one of Claims 2 to 4, **characterised in that** the R and R' groups are substituted and preferentially substituted by a substituent chosen from amongst the following groups: phenyl, benzyl or alkyl, linear or branched, having any number whatsoever of carbon atoms.

**10.** Use of a compound with an alkylene oxide chain as a thickener of aqueous compositions, containing a filler and/or pigmented, white or coloured, according to Claim 9, **characterised in that** said substituent or substituents are disposed on the aromatic groups.

**11.** Use of a compound with an alkylene oxide chain as a thickener of aqueous compositions, containing a filler and/or pigmented, white or coloured, according to Claim 10, **characterised in that** the substituents carried by the aromatic groups of the R and R' groups are themselves substituted.

**12.** Use of a compound with an alkylene oxide chain as a thickener of aqueous compositions, containing a filler and/or pigmented, white or coloured, according to Claim 4, **characterised in that** the TSP group is itself substituted by a styryl group, the R group then being a tetrastyrylphenyl group.

**13.** Use of a compound with an alkylene oxide chain as a thickener of aqueous compositions, containing a filler and/or pigmented, white or coloured, according to Claim 4, **characterised in that** the TSP group is substituted on a styryl group by a cyclohexanyl group.

**14.** A non-ionic thickener of aqueous compositions, containing a filler and/or pigmented, white or coloured, **characterised in that** said thickener is a compound based on polyisocyanate units, preferentially diisocyanate units, and has, at the chain end, hydrocarbon groups themselves having at least three aromatic radicals, substituted or not, and **characterised in that** said thickener fits the formula (I) below:

$$R\text{-}O\text{-}(OE)_x(OP)_y\text{-}(OE)_z\text{-}O\text{-}DI\text{-}(\text{-}PEG\text{-}DI\text{-})_n\text{-}O\text{-}(OE)_{x'}\text{-}(OP)_{y'}\text{-}(OE)_{z'}\text{-}O\text{-}R'$$

in which:

R and R' are hydrocarbon groups having at least three aromatic cycles, substituted or not, and are different or identical;
DI is a diisocyanate group such as toluene diisocyanate, isophorone diisocyanate or hexamethylene diisocyanate;
PEG is a polyethylene glycol group of molecular weight ranging from 6,000 to 20,000;
n is between 1 and 40;
x, z, x', z' are between 1 and 40;
y, y' are between 0 and 40;
with x + y + z + x'+ y' + z' between 2 and 80.

**15.** A non-ionic thickener of aqueous compositions, containing a filler and/or pigmented, white or coloured, according to Claim 14, **characterised in that** the molecular weight of the PEG is between 6,000 and 15,000, preferably close to 10,000.

**16.** A non-ionic thickener of aqueous compositions, containing a filler and/or pigmented, white or coloured, according to one of Claims 14 to 15, **characterised in that** n is close to 1.

**17.** A non-ionic thickener of aqueous compositions, containing a filler and/or pigmented, white or coloured, according to one of Claims 14 to 16, **characterised in that** the R and R' groups are a tristyrylphenyl (TSP) group with formula:

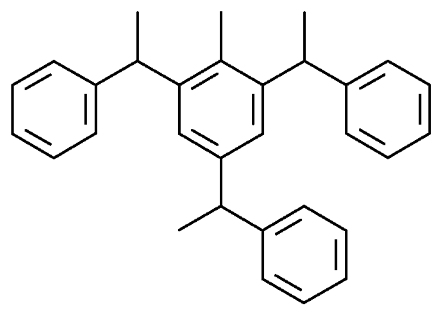

with x + x' + y + y' + z + z' between 2 and 80 inclusive
or a distyrylphenyl (DSP) group with formula

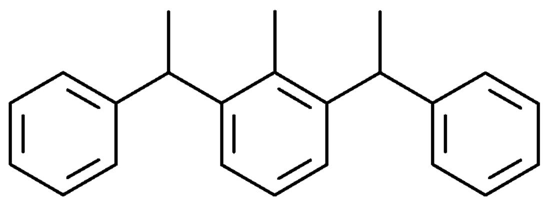

or

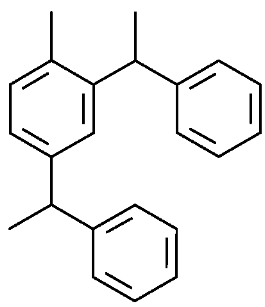

**18.** A non-ionic thickener of aqueous compositions, containing a filler and/or pigmented, white or coloured, according to one of Claims 14 to 17, **characterised in that** R = R' = TSP, and **in that** x + y + z + x' + y' + z' is between 2 and 50 with y=y' =z=z' =0.

**19.** A non-ionic thickener of aqueous compositions, containing a filler and/or pigmented, white or coloured, according to one of Claims 14 to 17, **characterised in that** x = x' = 1.3.

**20.** A non-ionic thickener of aqueous compositions, containing a filler and/or pigmented, white or coloured, according to one of Claims 14 to 17, **characterised in that** n = x = x' = 1 and y = y' = z = z' = 0.

**21.** A non-ionic thickener of aqueous compositions, containing a filler and/or pigmented, white or coloured, according to one of Claims 14 to 16, **characterised in that** the R and R' groups are substituted and preferentially substituted by a substituent chosen from amongst the following groups: phenyl, benzyl or alkyl, linear or branched, having any number whatsoever of carbon atoms.

**22.** A non-ionic thickener of aqueous compositions, containing a filler and/or pigmented, white or coloured, according to Claim 21, **characterised in that** said substituent or substituents are disposed on the aromatic groups.

**23.** A non-ionic thickener of aqueous compositions, containing a filler and/or pigmented, white or coloured, according to Claim 22, **characterised in that** the substituents carried by the aromatic groups of the R and R' groups are themselves substituted.

**24.** A non-ionic thickener of aqueous compositions, containing a filler and/or pigmented, white or coloured, according to Claim 17, **characterised in that** the TSP group is itself substituted by a styryl group, the R group then being a tetrastyrylphenyl group.

**25.** Use of a compound with an alkylene oxide chain as a thickener of aqueous compositions, containing a filler and/or pigmented, white or coloured, according to Claim 17, **characterised in that** the TSP group is substituted on a styryl group by a cyclohexanyl group.

**26.** An aqueous composition, containing a filler and/or pigmented, white or coloured, **characterised in that** it contains the thickening copolymer according to any one of Claims 13 to 25, preferentially from 0.1 % to 2% by dry weight, very preferentially from 0.2% to 1.0% by dry weight, of said thickening copolymer with respect to the total mass of the composition.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **RICHARD D. JENKINS ; DAVID R. BASSETT ; CESAR A. SILEBI ; MOHAMED S. EL-AASSER.** Synthesis and Characterization of Model Associative Polymers. *J. of Applied Polymer Science,* 1995, vol. 58, 209-230
- *Polymeric Mat. Sci. and Engineering,* 1988, vol. 59, 1033
- *Polymeric Mat. Sci. and Engineering,* 1989, vol. 61, 533
- *Polymeric Paint Colour Journal,* Juin 1986, vol. 176 (4169), 459